# FASCICULE DE BREVET EUROPEEN

(11) **EP 2 415 824 B1**
(45) Date de publication et mention de la délivrance du brevet: **20.06.2018**
(21) Numéro de dépôt: 11174521.2
(22) Date de dépôt: 19.07.2011
(51) Int. Cl.: C08J 3/24, C08J 3/20, B29C 35/02, C08L 23/06, C08L 23/12, C08L 75/04, C08L 77/00, C08G 69/40, C08G 18/50, C08G 18/60, C08L 77/02, C08L 67/00, B29B 7/46, B29B 7/02, C08L 97/02, C08L 51/06, C08K 5/00, C08G 77/12, C08L 63/00, C08L 83/04

(54) **Procédé de préparation d'une composition thermoplastique renforcée et réactive, et cette composition**
Verfahren zur Herstellung einer verstärkten und reaktiven thermoplastischen Zusammensetzung und diese Zusammensetzung
Process for preparing a reinforced, reactive thermoplastic composition, and said composition

(30) Priorité: 04.08.2010 FR 1003268
(43) Date de publication de la demande: 08.02.2012
(73) Titulaire: HUTCHINSON, 75008 Paris (FR)
(72) Inventeur: Garois, Nicolas, 45200 Amilly (FR); Sonntag, Philippe, 77850 Hericy (FR); Martin, Grégory, 45700 Villemandeur (FR); Vatan, Matthieu, 45390 Puiseaux (FR); Drouvroy, Jacques, 45200 Montargis (FR)
(74) Mandataire: Gevers & Orès

(56) Documents cités:
- EP-A1- 0 529 799
- WO-A1-2007/001609
- WO-A1-2009/072677
- JP-A- 2008 111 062
- US-A1- 2004 260 023
- US-A1- 2005 277 737
- XUELIANG JIANG, HUA HUANG, YONG ZHANG, YINXI ZHANG: "Dynamically cured polypropylene/epoxy blends", JOURNAL OF APPLIED POLYMER SCIENCE, vol. 92, no. 3, 26 février 2004 (2004-02-26), pages 1437-1448, XP002619963, DOI: 10.1002/app.13700
- LAURE MEYNIE, ALEXIA HABRARD, FRANÇOISE FENOUILLOT, JEAN-PIERRE PASCAULT: "Limitation of the Coalescence of Evolutive Droplets by the Use of Copolymers in a Thermoplastic/Thermoset Blend", MACROMOLECULAR MATERIALS AND ENGINEERING, vol. 290, no. 9, 31 août 2005 (2005-08-31) , pages 906-911, XP002619964, DOI: 10.1002/mame.200500192

## Description

La présente invention concerne un procédé de préparation d'une composition thermoplastique renforcée et réactive, comprenant une phase continue qui est à base d'au moins un polymère thermoplastique et dans laquelle est dispersée une phase discontinue à base d'au moins un agent de renforcement réactif pouvant être immiscible avec ledit au moins un polymère thermoplastique, ainsi qu'une composition obtenue par ce procédé.

Il est connu de disperser par mélangeage réactif un polymère thermodurcissable dans une matrice thermoplastique, que ce soit dans un mélangeur interne ou dans une extrudeuse bi-vis, pour obtenir un alliage thermoplastique/ thermodurcissable présentant des propriétés mécaniques améliorées en comparaison de celles de la seule matrice thermoplastique.

On peut par exemple citer le rapport de thèse de Mme Laure Meynié (soutenue le 9 juin 2003 devant l'Institut National des Sciences Appliquées de Lyon) intitulé Evolution et contrôle de la morphologie d'un mélange thermoplastique/thermodurcissable polymérisé sous cisaillement (voir notamment la page 19 de ce rapport), qui présente l'utilisation d'une extrusion réactive pour l'obtention de telles dispersions. Un inconvénient des procédés de dispersion mentionnés dans ce rapport est qu'un agent compatibilisant, tel qu'un copolymère à blocs acrylates ou méthacrylates, est requis pour compatibiliser des polymères immiscibles, étant précisé que la majeure partie de ce rapport porte sur un mélange de polymères miscibles et ne détaille pas les caractéristiques de cisaillement et de profil des éléments de vis d'extrusion, ni les points d'injection des agents de renforcement utilisés. Un autre inconvénient des dispersions obtenues dans ce rapport réside dans leur caractère relativement peu homogène dans la matrice thermoplastique ainsi que dans les morphologies relativement grossières obtenues pour les nodules de résine époxy dispersés dans une matrice thermoplastique immiscible (en général avec des nodules de taille moyenne en nombre supérieure à 10 µm et avec des démixtions entre les deux phases).

On peut également citer le document de Brevet US-A-5 709 948 qui présente des compositions thermoplastiques par exemple à base d'une polyoléfine renforcée par une résine époxy, laquelle est dispersée par mélangeage réactif dans une extrudeuse bi-vis ou dans un mélangeur interne avec un agent réticulant de la résine. Ce document ne donne aucune indication sur la morphologie obtenue pour les nodules de résine époxy, que ce soit en termes de finesse ou d'homogénéité de la dispersion.

Le document WO-A1-2007/001609 concerne un vulcanisat thermoplastique comprenant une phase discontinue élastomère qui est majoritairement constituée d'un caoutchouc EPDM vulcanisé et qui est dispersée dans une phase continue thermoplastique.

Le document EP-A1-0 529 799 enseigne d'utiliser une phase discontinue élastomère qui est majoritairement constituée d'un élastomère thermoplastique SBS (à blocs polystyrène-polybutadiène-polystyrène) et qui est partiellement dispersée dans une phase continue thermoplastique au moyen d'un agent compatibilisant.

Le document US-A1-2005/0277737 enseigne d'utiliser une phase discontinue élastomère qui est majoritairement constituée d'un caoutchouc nitrile réticulé (NBR) et qui est dispersée dans une phase continue thermoplastique.

Un but de la présente invention est de remédier aux inconvénients précités, et ce but est atteint en ce que la Demanderesse vient de découvrir d'une manière inattendue que si l'on soumet à un mélangeage réactif avec un taux de cisaillement supérieur à 10³ s⁻¹, au moins un polymère thermoplastique et au moins un agent chimique de renforcement réactif qui peut être immiscible avec ce dernier et qui est choisi dans le groupe constitué par les résines époxy, les polyorganosiloxanes à groupe(s) fonctionnel(s) SiH, les di- ou poly-isocyanates et leurs mélanges, alors on peut avantageusement obtenir, par un greffage, une ramification (par des chaînes latérales) et/ou une réticulation *in situ* dudit au moins un agent de renforcement sur la chaîne dudit au moins un polymère thermoplastique (cette réticulation se traduisant par une liaison des chaînes polymériques entre elles) avec ajout éventuel d'un agent réticulant en quantité stoechiométrique ou non, une composition thermoplastique réactive comprenant une phase continue qui est à base dudit au moins un polymère thermoplastique et dans laquelle est dispersée de manière homogène (avec un écart-type maximum de 0,5 µm) et sous forme de nodules de taille moyenne en nombre, mesurée au microscope à force atomique, comprise entre 50 nm et 2 µm, une phase discontinue à base dudit au moins un agent de renforcement. La composition thermoplastique réactive ainsi obtenue est dépourvue de tout agent compatibilisant entre les phases. Il est à noter que l'expression « phase discontinue à base dudit au moins un agent de renforcement » signifie dans la présente description que la phase discontinue selon l'invention est exclusivement constituée (i.e. à 100 %) ou au moins majoritairement constituée (i.e. à plus de 50 % et de préférence à plus de 75 %), à titre limitatif, d'une résine époxy et/ou d'un polyorganosiloxane à groupe(s) SiH et/ou d'un di- ou poly-isocyanate, contrairement aux dispersions décrites dans les trois derniers documents commentés ci-dessus.

On notera que ces valeurs très élevées du taux de cisaillement y (lequel est classiquement défini par le rapport y = υ / h, où υ est la vitesse linéaire de rotation en m.s⁻¹ des vis dans le cas d'une extrudeuse ou des pales du rotor dans le cas d'un mélangeur interne et h la largeur de passage du mélange en m, ce taux pouvant atteindre des valeurs égales ou supérieures à 10⁴ s⁻¹ ou même à la limite voisines de 10⁷ s⁻¹), témoignent d'efforts de cisaillement du mélange très supérieurs à ceux utilisés dans l'art antérieur pour l'obtention de compositions thermoplastiques renforcées, et que ce cisaillement spécifique contribue de façon très nette à la réactivité dudit au moins un agent de renforcement et permet de manière surprenante l'obtention d'une dispersion très fine et homogène dans la matrice thermoplastique (avec des tailles moyennes en nombre de nodules comprises entre 50 nm et 2 µm et avantageusement de 1 µm seulement avec l'écart-type maximum de 0,5 µm). Ce fort taux de cisaillement est ainsi indispensable pour l'obtention d'un matériau thermoplastique homogène caractérisé par cette morphologie fine, dans le cas où ledit au moins un agent de renforcement réactif est immiscible avec ledit au moins un polymère thermoplastique, ce que n'enseignait pas l'art antérieur présenté ci-dessus et notamment le rapport de thèse précité.

On notera également que grâce à ce procédé selon l'invention, la taille des nodules est avantageusement sensiblement constante indépendamment du taux d'agent de renforcement utilisé et avec un écart-type minimisé en comparaison des écarts-types obtenus pour les dispersions de l'art antérieur.

Selon une autre caractéristique préférentielle de l'invention, l'on réalise ce mélangeage réactif sous une atmosphère non inerte (i.e. typiquement sous air, contrairement aux atmosphères inertes usuelles d'azote ou d'argon) et à une température supérieure d'au moins 30° C au point de fusion dudit polymère thermoplastique ou de celui desdits polymères thermoplastiques qui est le plus élevé.

Avantageusement, l'on peut se passer de tout agent compatibilisant entre lesdites phases lors de ce mélangeage réactif, même lorsque le polymère thermoplastique et l'agent de renforcement réactif utilisés sont immiscibles ou peu miscibles. Ce procédé de l'invention permet ainsi de s'affranchir des agents compatibilisants usuels de type terpolymères à blocs « SBM » (polystyrène/polybutadiène-1,4/polyméthacrylate de méthyle), « MAM » (polyméthacrylate de méthyle/polyacrylate de butyle/méthacrylate de méthyle) ou d'autres copolymères à segments acrylates ou méthacrylates. L'ajout d'un tel agent compatibilisant peut toutefois permettre d'améliorer les propriétés de la composition obtenue.

En variante, on peut utiliser lors de ce mélangeage réactif au moins un agent compatibilisant entre ces phases qui est choisi dans le groupe constitué par les monomères, oligomères et polymères statistiques ou à blocs ayant au moins un groupe fonctionnel acrylate, méthacrylate ou amine et les polyoléfines greffées de préférence par un anhydride maléique, et cet agent compatibilisant est de préférence une telle polyoléfine greffée en particulier dans le cas où ledit au moins un polymère thermoplastique est polyoléfinique.

Avantageusement, l'on peut réaliser ce mélangeage réactif dans une extrudeuse bi-vis de préférence co-rotatives ou en variante contre-rotatives (étant précisé que la largeur de passage h précitée pour la mesure du taux de cisaillement est alors égale à l'espacement entre les deux vis et que ce taux de cisaillement peut par exemple y être compris entre 10³ s⁻¹ et 10⁴ s⁻¹), en au moins une passe et avec un temps de séjour desdites phases pouvant être compris entre 1 min. et 2 min. On peut dans ce cas introduire ledit au moins un agent de renforcement dans l'extrudeuse au moyen d'une pompe par exemple péristaltique (étant précisé que tout autre système de pompage prévu en début, en coeur ou en fin d'extrusion est utilisable), suite à l'introduction dudit au moins un polymère thermoplastique.

On notera que ce taux de cisaillement très élevé est utilisé dans le procédé de l'invention en relation avec un profil de vis très sévère pour l'extrudeuse. On notera que ce type de profil de cisaillement très élevé est essentiel au mélangeage des phases lorsque ledit au moins un polymère thermoplastique et ledit au moins un agent renforçant sont immiscibles, et qu'il permet de s'affranchir d'agents compatibilisants.

En variante, on peut réaliser ce mélangeage réactif dans un mélangeur interne ou de préférence dans un mélangeur haute vitesse (étant précisé que la largeur de passage h précitée pour la mesure du taux de cisaillement est alors égale à l'espacement entre les pales du rotor et la paroi du mélangeur et que ce taux de cisaillement peut par exemple y être compris entre 10³ s⁻¹ et 10⁷ s⁻¹), en y introduisant simultanément ou non ledit au moins un polymère thermoplastique et ledit au moins un agent de renforcement. Dans ce cas également, de fortes vitesses de cisaillement sont essentielles au bon mélangeage dudit au moins un polymère thermoplastique et dudit au moins un agent de renforcement. On notera que le pilotage manuel du taux de cisaillement est important pour ce mélangeur interne ou à haute vitesse.

Selon un premier mode de réalisation de l'invention pouvant être mis en oeuvre indifféremment dans une extrudeuse bi-vis ou dans un mélangeur interne, on utilise pour ledit au moins un agent de renforcement une résine époxy au moins partiellement réticulée ou non réticulée qui est présente dans la composition selon une quantité comprise entre 0,5 et 60 parties en poids pour 100 parties de polymère(s) thermoplastique(s), cette résine époxy étant de préférence choisie dans le groupe constitué par les résines époxy bisphénol A, les résines époxy bisphénol F, les résines époxy glycol, les résines époxy bromées, les résines époxy novolaque, les résines époxy phénoliques, les résines époxy base vinyle et/ou glycidyl-éther, les monomères, oligomères et polymères à blocs de ces résines et leurs mélanges.

Avantageusement selon ce premier mode, l'on peut se passer de tout système de réticulation de ladite résine époxy, laquelle réagit ainsi sous atmosphère non inerte *in situ* par voie radicalaire (i.e. par un cisaillement générant la formation de radicaux *in situ*) avec ledit au moins un polymère thermoplastique à la manière d'un agent de terminaison.

En variante, on peut utiliser un système de réticulation de cette résine époxy choisi dans le groupe constitué par les di- ou polyétheramines, les di- ou polydiméthylsiloxanes fonctionnalisés amine, les di- ou polyamines hydrocarbonées aliphatiques et aromatiques (pouvant être tant saturées qu'insaturées), les polyphénylène sulfone amines, les di- ou polyanhydrides et les di- ou polycyanamides.

Dans le cas où l'on utilise une extrudeuse bi-vis, on peut co-extruder lors d'une première passe la résine époxy et la matrice thermoplastique puis après traitement thermique ou non, lors d'une seconde passe, incorporer un agent de réticulation qui réticule *in situ* la résine pré-greffée, pré-ramifiée et/ou pré-réticulée, optionnellement complété par un agent accélérateur (e.g. un imidazole ou un urone) afin de corréler la cinétique de réticulation de la résine époxy au profil de vis de l'extrudeuse et au temps de séjour de la matière dans cette extrudeuse.

Selon un deuxième mode de réalisation de l'invention pouvant être mis en oeuvre indifféremment dans une extrudeuse bi-vis ou dans un mélangeur interne, on utilise un polyorganosiloxane à groupes fonctionnels SiH le long de la chaîne ou en extrémités de chaîne (e.g. un PDMS-SiH) pour ledit au moins un agent de renforcement, selon une quantité comprise entre 0,1 et 40 parties en poids pour 100 parties de polymère(s) thermoplastique(s).

Selon un troisième mode de réalisation de l'invention pouvant être mis en oeuvre indifféremment dans une extrudeuse bi-vis ou dans un mélangeur interne, on utilise un di- ou poly-isocyanate pour ledit au moins un agent de renforcement selon une quantité comprise entre 0,5 et 30 parties en poids pour 100 parties de polymère(s) thermoplastique(s), ce di- ou polyisocyanate étant de préférence choisi dans le groupe constitué par le diphénylméthane-4,4'-diisocyanate (MDI), le toluène-2,4-diisocyanate (TDI), l'hexaméthylène-1,6-diisocyanate (HDI), le polyméthylène polyphényl isocyanate (PMPPI) et leurs mélanges.

Une composition thermoplastique réactive selon l'invention comprend une phase continue qui est à base d'au moins un polymère thermoplastique et dans laquelle est dispersée une phase discontinue à base d'au moins un agent chimique de renforcement réactif pouvant être immiscible avec ce(s) polymère(s) thermoplastique(s) et choisi dans le groupe constitué par les résines époxy, les polyorganosiloxanes à groupe(s) fonctionnel(s) SiH, les di- ou poly-isocyanates et leurs mélanges, et cette composition qui est dépourvue de tout agent compatibilisant entre ces phases comprend le produit d'une réaction *in situ* de greffage, de ramification et/ou de réticulation, par un mélangeage réactif de ces phases sous un taux de cisaillement supérieur à 10³ s⁻¹, dudit au moins un agent de renforcement sur la chaîne dudit au moins un polymère thermoplastique, de sorte que ce(s) dernier(s) présente(nt) par cette réaction de compatibilisation réactive une structure greffée, ramifiée (par des chaînes latérales) et/ou réticulée, ladite phase discontinue étant dispersée de manière homogène dans ladite phase continue sous forme de nodules de taille moyenne en nombre, mesurée au microscope à force atomique, comprise entre 50 nm et 2 µm avec un écart-type maximum de 0,5 µm (comme indiqué précédemment, ces nodules présentent avantageusement une taille sensiblement constante indépendamment du taux d'agent de renforcement et avec un écart-type de seulement 0,5 µm en comparaison des nodules de l'art antérieur).

On notera que cette structure plus ou moins greffée, ramifiée et/ou réticulée qui est obtenue se traduit par une nette augmentation de la viscosité de la composition suite au mélangeage réactif.

On notera également que la nature du couple agent de renforcement / polymère(s) thermoplastique(s) ainsi que les conditions du procédé de préparation permettent de contrôler le taux de greffage, de ramification et/ou de réticulation, selon le cas.

On notera en outre que le contrôle de la cinétique de réaction chimique, des proportions de chaque constituant et des paramètres opératoires permet de jouer sur la structure et sur la morphologie finales de la composition thermoplastique renforcée.

Avantageusement, les compositions de l'invention présentent des propriétés mécaniques isotropes améliorées en comparaison de celles dudit au moins un polymère thermoplastique qu'elles incorporent et qui serait dépourvu de la phase discontinue, telles qu'un fluage, une relaxation sous contrainte et un seuil de plasticité minimisés et un module d'Young, une tenue aux chocs et une contrainte à la rupture améliorés.

Les compositions renforcées selon l'invention présentent ainsi notamment un fluage limité, et présentent des propriétés homogènes et isotropes rivalisant avec celles de compositions thermoplastiques connues renforcées par exemple par des fibres de verre tout en conservant notamment l'allongement à la rupture et l'aptitude à la mise en oeuvre des polymères thermoplastiques.

En d'autres termes, les renforcements utilisés pour obtenir ces compositions de l'invention permettent une modification intrinsèque de la matière et d'obtenir un matériau « visco-élasto-plastique » à partir d'un matériau viscoplastique, en améliorant les propriétés mécaniques et dynamiques de la matrice thermoplastique utilisée (en traction, en compression, en cisaillement, aux chocs et en flexion) et en modifiant, voire en supprimant le seuil d'écoulement de la composition quasiment sans altérer son aptitude à la mise en oeuvre (i.e. autorisant dans de bonnes conditions sa transformation ou son recyclage, ce qui n'est pas le cas de compositions thermoplastiques connues renforcées par des fibres).

A titre exemplatif, on peut notamment citer pour ces propriétés mécaniques améliorées :
- un module en traction à 50 % de déformation avantageusement égal ou supérieur à 40 MPa pour des compositions selon l'invention à base d'un PEBA,
- un module en traction à 10 % de déformation avantageusement égal ou supérieur à 40 MPa pour des compositions selon l'invention à base d'un polyéthylène,
- un module en traction à 10 % de déformation avantageusement égal ou supérieur à 35 MPa pour des compositions selon l'invention à base d'un polypropylène,
- un module en traction à 100 % de déformation avantageusement égal ou supérieur à 14 MPa pour des compositions selon l'invention à base d'un TPU, et
- une déformation de fluage en traction mesurée selon la norme ISO 899-1 à 100° C et sur des éprouvettes de type 1A, qui est :
   * inférieure à 4 % pour des compositions selon l'invention à base d'un PEBA (sous une contrainte de 5 MPa),
   * inférieure à 1,5 % pour des compositions selon l'invention à base d'un polypropylène (sous contrainte de 2,5 MPa), et
   * inférieure à 7 % pour des compositions selon l'invention à base d'un polyamide PA 6 (sous contrainte de 15 MPa).

On peut par ailleurs noter le caractère facultatif (i.e. non nécessaire pour l'obtention de ces propriétés améliorées) d'un recuit de la composition suite au mélangeage réactif selon l'invention, étant précisé que cette étape finale de recuit peut néanmoins s'avérer utile pour améliorer le niveau de renforcement de la matrice thermoplastique. En d'autres termes, les compositions thermoplastiques renforcées selon l'invention peuvent être utilisées sans recuit, mais leurs propriétés peuvent être encore améliorées après recuit. Sans recuit, ces compositions selon l'invention sont réactives car toutes les fonctions apportées par l'agent de renforcement réactif ne peuvent réagir uniquement lors de leur procédé de préparation et peuvent donc être par la suite utilisé comme telles. Avec un recuit, on fige a *posteriori* la morphologie de la composition et l'on peut achever de convertir les fonctions réactives n'ayant pas totalement réagi lors de sa préparation.

En référence au premier mode précité de l'invention, ledit au moins un agent de renforcement est de type thermodurcissable et peut comprendre une résine époxy au moins partiellement réticulée ou non réticulée selon une quantité comprise entre 0,5 et 60 parties en poids pour 100 parties de polymère(s) thermoplastique(s), cette résine époxy étant de préférence choisie dans le groupe constitué par les résines époxy bisphénol A, les résines époxy bisphénol F, les résines époxy glycol, les résines époxy bromées, les résines époxy novolaque, les résines époxy phénoliques, les résines époxy base vinyle et/ou glycidyl-éther, les monomères, oligomères et polymères à blocs de ces résines, et leurs mélanges. La composition selon l'invention peut être dépourvue de tout système de réticulation de cette résine époxy, laquelle réagit sous atmosphère non inerte *in situ* par voie radicalaire (i.e. par un cisaillement générant la formation de radicaux *in situ*) avec ledit au moins un polymère thermoplastique à la manière d'un agent de terminaison, ou bien en variante comprendre un tel système de réticulation pouvant être choisi dans le groupe constitué par les di- ou polyétheramines, les di- ou polydiméthylsiloxanes fonctionnalisés amine, les di- ou polyamines hydrocarbonées, les polyphénylène sulfone amines, les di- ou polyanhydrides et les di- ou polycyanamides.

Comme cela apparaîtra dans la description détaillée ci-dessous de plusieurs exemples de l'invention relatifs à ce premier mode, on notera que l'effet de renforcement obtenu est de nature différente selon la matrice thermoplastique utilisée et la nature de l'agent de renforcement réactif choisi. Dans le cas de polymères thermoplastiques possédant des fonctions basiques de type amide ou uréthanne, comme les polyéthers blocs amides (PEBA) ou les polyamides (PA) ou les polyuréthannes thermoplastiques (TPU), le simple ajout d'une résine époxy induit un effet de renforcement instantané sans même réticuler cette résine, ce renforcement étant toutefois accru par sa réticulation.

En référence au deuxième mode précité de l'invention, ledit au moins un agent de renforcement peut comprendre un polyorganosiloxane à groupes fonctionnels SiH le long de la chaîne ou en extrémités de chaîne, selon une quantité comprise entre 0,1 et 40 parties en poids pour 100 parties de polymère(s) thermoplastique(s).

En référence au troisième mode précité de l'invention, ledit au moins un agent de renforcement peut comprendre un di- ou poly-isocyanate selon une quantité comprise entre 0,5 et 30 parties en poids pour 100 parties de polymère(s) thermoplastique(s), ce di- ou polyisocyanate étant de préférence choisi dans le groupe constitué par le diphénylméthane-4,4'-diisocyanate (MDI), le toluène-2,4-diisocyanate (TDI), l'hexaméthylène-1,6-diisocyanate (HDI), le polyméthylène polyphényl isocyanate (PMPPI) et leurs mélanges.

D'une manière générale, on notera que l'effet de renforcement peut éventuellement être accentué par étirage - donc hyper cristallisation - de ces polymères thermoplastiques renforcés (les mélanges obtenus étant transformables selon les moyens habituels de transformation des thermoplastiques).

Avantageusement, ledit au moins un polymère thermoplastique peut être choisi dans le groupe constitué par les homopolymères et copolymères d'oléfines, les polyamides aliphatiques, semi-aromatiques et aromatiques de type polyphtalamides, les polyimides (PI), les polyamide-imide (PAI), les polyéther-imide (PEI), les élastomères thermoplastiques (TPE), les polyphénylènes sulfone, les polyéthers sulfone (PES), les polystyrènes (PS), les polysulfones (PSU), les polyesters, les polyoxydes d'éthylène et d'autres monomères oléfiniques, les polysulfures de phénylène (PPS), les polyéther éther cétone (PEEK), les polyéthers cétone (PEK), les polyéthers cétone cétone (PEKK), leurs copolymères à blocs et leurs mélanges, et est de préférence choisi dans le groupe constitué par les polypropylènes, les copolymères de propylène-éthylène, de propylène-hexène, d'éthylène-butène et d'éthylène-octène, les polyéthylènes, les copolyesters (COPE), les polyéthers bloc amide (PEBA), les polyuréthannes thermoplastiques (TPU), les polyamides 6, 4.6, 6.6, 6.6.6, 11, 12, leurs copolymères à blocs et leurs mélanges.

Selon des exemples particulièrement avantageux de réalisation de l'invention mentionnés à titre non limitatif :
- la phase continue est à base d'au moins un polyéther bloc amide (PEBA) et la phase discontinue à base d'au moins une résine époxy et de préférence d'un système de réticulation de type amine, ou
- la phase continue est à base d'un polyuréthanne thermoplastique (TPU) et la phase discontinue à base d'un polyorganosiloxane à groupe(s) fonctionnel(s) SiH ou d'un di- ou polyisocyanate, ou bien
- la phase continue est à base d'un mélange d'au moins un polyéther bloc amide (PEBA) et d'un polyuréthanne thermoplastique (TPU), et la phase discontinue à base soit d'au moins une résine époxy et de préférence d'un système de réticulation amine, soit d'un di- ou polyisocyanate ; ou encore
- la phase continue est à base d'un polyamide, et la phase discontinue à base d'au moins une résine époxy et de préférence d'un système de réticulation amide avec ou sans agent à blocs amine, acrylate ou méthacrylate.

D'une manière générale en référence à tout ce qui vient d'être dit, on notera que le procédé de préparation (i.e. avec extrusion ou mélangeage) est à ajuster afin de contrôler la cinétique de réaction des phases. En effet, des paramètres tels que le temps d'extrusion ou de mélangeage, la vitesse de cisaillement et la température de transformation doivent être ajustés pour chaque couple polymère(s) thermoplastique(s) - agent(s) de renforcement réactif(s), afin de contrôler qualitativement le degré de greffage, de ramification et/ou de réticulation de l'agent réactif sur le(s) polymère(s) thermoplastique(s). On obtient ainsi une phase thermoplastique renforcée qui est réactive, du fait qu'elle présente après élaboration toujours quelques fonctions réactives de l'agent ayant réagi, sous l'effet du cisaillement ou non, avec les fonctions latérales ou en bout(s) de chaîne(s) de la phase thermoplastique. Cet ajustement des paramètres du procédé permet ainsi de jouer sur la miscibilité et la réactivité des phases et est donc un élément essentiel à ce type de couplage, permettant de coupler non seulement diverses phases réactives à une phase thermoplastique mais en outre de laisser des fonctions réactives résiduelles sur la ou les chaînes polymérique(s) dudit au moins un polymère thermoplastique renforcé qui permettent aux compositions thermoplastiques réactives de l'invention (ainsi plus ou moins greffées, ramifiées et/ou réticulées) de réagir par la suite avec d'autres phases en étant utilisables pour former un système réactif choisi dans le groupe constitué par les systèmes compatibilisants entre phases, les systèmes d'ensimage de fibres dans des composites et les systèmes de dispersion de charges dans des phases thermoplastiques.

On peut également noter que le procédé selon l'invention permet, contrairement à l'art antérieur, de mélanger intimement une grande proportion (jusqu'à 60 parts massiques) d'agent de renforcement de type monomère, oligomère ou polymère (e.g. une résine époxy) avec une phase thermoplastique immiscible en dépit du fort écart de viscosité entre cet agent et cette phase, grâce notamment au cisaillement important mis en oeuvre et à des points d'injection contrôlés pour l'agent de renforcement réactif, et de greffer, ramifier et/ou réticuler *in situ* sans difficulté cette phase.

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les dessins joints, parmi lesquels :
la figure 1 est un graphique contrainte-allongement montrant trois courbes de compositions selon le premier mode de l'invention où les phases continue et discontinue sont respectivement à base d'un polyéthylène haute densité et d'une résine époxy optionnellement avec un agent réticulant amine, et une courbe témoin relative à ce seul polyéthylène,
les figures 2a et 2b sont deux clichés au microscope à force atomique montrant la morphologie de deux compositions selon ce premier mode toutes deux à base d'un polyéthylène haute densité et d'une résine époxy avec un agent réticulant amine, respectivement obtenues en mélangeur interne et dans une extrudeuse bi-vis,
la figure 3 est un graphique contrainte-allongement montrant trois courbes de compositions extrudées selon le premier mode de l'invention à base d'un polypropylène et d'une résine époxy avec un agent réticulant amine, et une courbe témoin relative à ce seul polypropylène,
les figures 4a, 4b, 4c sont trois clichés au microscope à force atomique montrant la morphologie de trois compositions extrudées selon ce premier mode toutes deux à base d'un polypropylène et d'une résine époxy avec ou sans agent réticulant amine et obtenues, respectivement avec 3,5 parties en poids d'époxy-amine, 2,5 parties d'époxy et 35 parties d'époxy-amine,

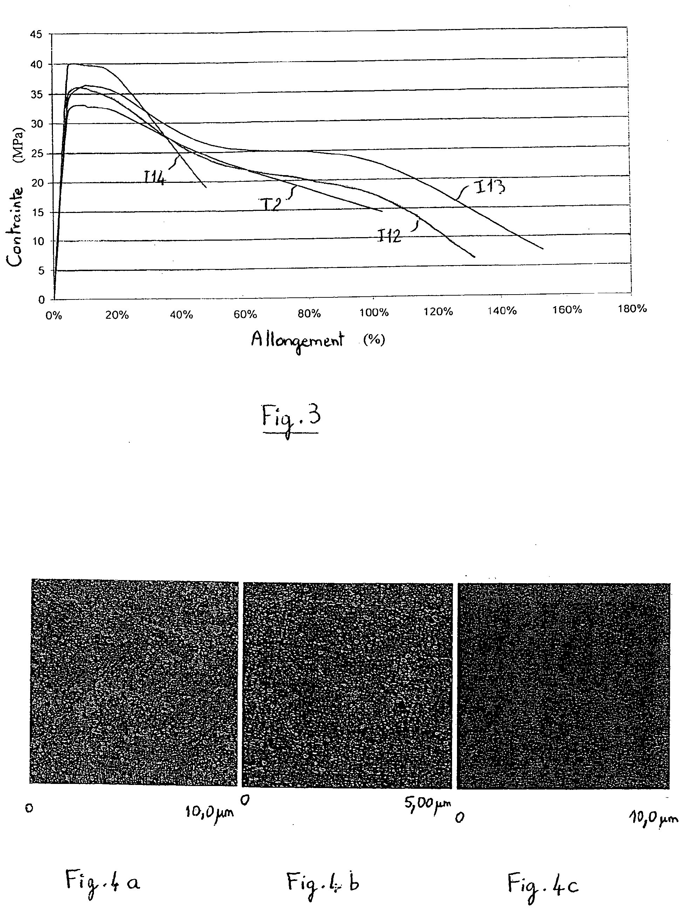

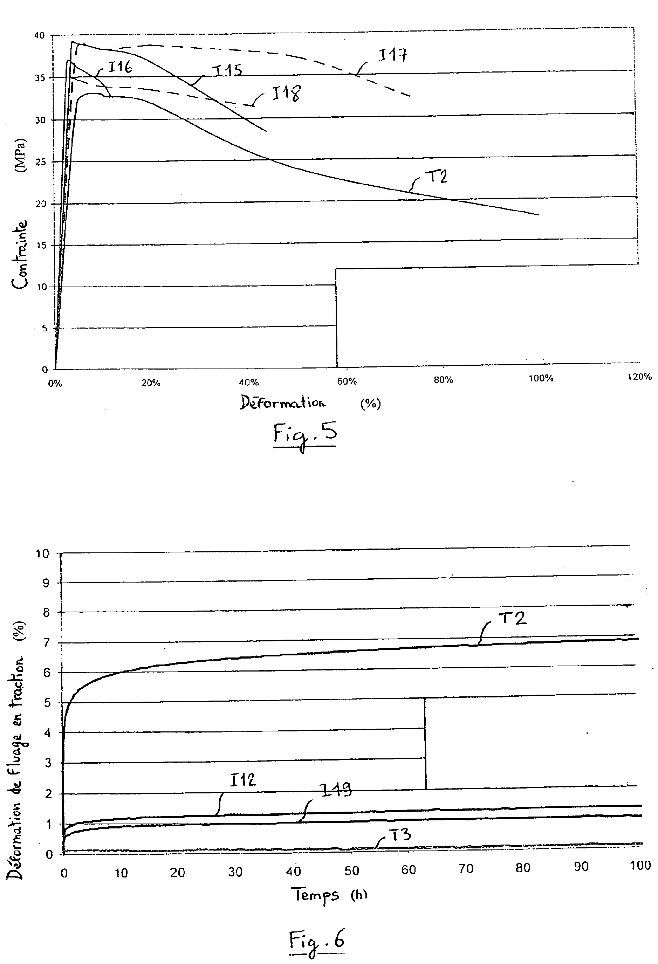

la figure 5 est un graphique contrainte-allongement montrant, en comparaison de la courbe témoin de la figure 3 relative au polypropylène, quatre courbes de compositions extrudées selon le premier mode de l'invention à base de ce polypropylène et d'une époxy-amine parmi lesquelles deux courbes (respectivement avec 14 et 28 parties en poids d'époxy-amine) montrent l'influence d'un agent compatibilisant formé d'un polypropylène greffé anhydride maléique (1 partie en poids à chaque fois) et deux autres courbes montrent l'influence d'un recuit en plus de ce même agent compatibilisant et de ces deux quantités d'époxy-amine,
la figure 6 est un graphique déformation de fluage en traction - temps montrant, en comparaison de deux courbes témoin relatives à un polypropylène renforcé par des fibres de verre et à ce seul polypropylène, une courbe selon le premier mode de l'invention à base de ce polypropylène et d'une époxy-amine extrudés et une courbe selon le deuxième mode de l'invention à base de ce polypropylène et d'un PDMS-SiH extrudés,
la figure 7 est un graphique contrainte-allongement montrant trois courbes de compositions extrudées selon les premier et deuxième modes de l'invention toutes trois à base d'un TPU, la première incorporant une résine époxy, la deuxième une époxy-amine et la troisième un PDMS-SiH, et une courbe témoin relative à ce seul TPU,
les figures 8a et 8b sont deux clichés au microscope à force atomique suivant des phases différentes montrant la morphologie d'une composition à base d'un TPU selon ce premier mode incorporant une époxy-amine,
la figure 9 est un graphique contrainte-allongement montrant une courbe d'une composition obtenue en mélangeur interne à base d'un TPU mais renforcée selon le troisième mode de l'invention par un MDI, en comparaison d'une courbe témoin relative à ce seul TPU,
les figures 10a et 10b sont deux clichés au microscope à force atomique suivant des phases différentes montrant la morphologie de cette composition à base d'un TPU et d'un MDI selon ce troisième mode,
la figure 11 est un graphique contrainte-allongement montrant trois courbes de compositions extrudées à base d'un PEBA et renforcées selon le premier mode de l'invention par une époxy-amine, en comparaison d'une courbe témoin relative à ce seul PEBA,
les figures 12a, 12b, 12c sont trois clichés au microscope à force atomique montrant la morphologie de trois compositions extrudées à base d'un PEBA, respectivement une composition témoin constituée de ce seul PEBA, une composition selon le premier mode avec 7 parties en poids d'époxy-amine et une composition selon le deuxième mode avec 1 partie en poids de PDMS-SiH,
la figure 13 est un graphique montrant l'augmentation des modules élastiques et visqueux du PEBA extrudé avec la résine époxy et avec l'époxy-amine, de -100° C à 160° C, avec modification de la transition vitreuse et augmentation de la température de ramollissement,
la figure 14 est un graphique déformation de fluage en traction - temps montrant, en comparaison d'une courbe témoin relative au seul PEBA, deux courbes selon le premier mode de l'invention à base de ce PEBA et d'une époxy-amine extrudés,
la figure 15 est un graphique contrainte-allongement montrant une courbe d'une composition extrudée à base d'un PEBA renforcé selon le deuxième mode de l'invention par un PDMS-SiH, en comparaison d'une courbe témoin relative à ce seul PEBA,
les figures 16a et 16b sont deux clichés au microscope à force atomique montrant respectivement la morphologie du seul PEBA et celle de ce PEBA extrudé et renforcé par ce PDMS-SiH,
la figure 17 est un graphique montrant l'augmentation des modules élastiques et visqueux du PEBA extrudé avec ce PDMS-SiH, de - 40° C à 160° C, avec modification de la transition vitreuse et augmentation de la température de ramollissement,
la figure 18 est un graphique contrainte-allongement montrant une courbe d'une composition extrudée à base d'un PEBA renforcé selon le troisième mode de l'invention par un MDI, en comparaison d'une courbe témoin relative à ce seul PEBA,
les figures 19a et 19b sont deux clichés au microscope à force atomique montrant suivant des phases différentes la morphologie d'une composition selon ce troisième mode à base du PEBA et du MDI,
la figure 20 est un graphique contrainte-allongement montrant deux courbes de compositions extrudées selon l'invention à base d'un polyamide PA 6 et renforcées selon le premier mode de l'invention respectivement par une résine époxy et par une époxy-amine, en comparaison d'une courbe témoin relative à ce seul PA 6,
la figure 21 est un graphique contrainte-allongement montrant cinq courbes de compositions extrudées selon l'invention à base d'un autre polyamide PA 6 et renforcées par une résine époxy, une époxy-amine ou par un PDMS-SiH en comparaison d'une courbe témoin relative à ce seul PA 6,
la figure 22 est un graphique montrant l'augmentation des modules élastiques et visqueux de ces compositions à base de PA 6 et d'époxy-amine ou bien de PDMS-SiH, de -40° C à 200° C, avec modification de la transition vitreuse et augmentation de la température de ramollissement,
la figure 23 est un graphique déformation de fluage en traction - temps montrant, en comparaison de deux courbes témoin relatives au seul PA 6 des figures 21 et 22 et à ce PA 6 renforcé par des fibres de verre, deux courbes de compositions extrudées selon l'invention à base de ce PA 6 renforcées par une résine époxy et par un PDMS-SiH, respectivement,
la figure 24 est un graphique contrainte-allongement montrant une courbe de composition extrudée selon l'invention à base d'un polyamide PA 11 et renforcée par une résine époxy, en comparaison d'une courbe témoin relative à ce seul PA 11,
la figure 25 est un graphique contrainte-allongement montrant deux courbes de compositions extrudées selon l'invention à base d'un polyamide PA 12 et renforcées par une résine époxy présente selon 1 et 2 parties en poids, respectivement, en comparaison d'une courbe témoin relative à ce seul PA 12,
la figure 26 est un graphique contrainte-allongement montrant deux courbes de compositions extrudées selon l'invention à base d'un mélange TPU + PEBA renforcé *in situ* par une époxy-amine et pré-renforcé par cette époxy-amine, respectivement, en comparaison d'une courbe témoin relative à ce seul mélange TPU + PEBA,
les figures 27a, 27b, 27c sont trois clichés au microscope à force atomique montrant les morphologies respectives de ces trois compositions relatives à la figure 26 selon le premier mode de l'invention,
la figure 28 est un graphique contrainte-allongement montrant trois courbes de compositions extrudées selon l'invention à base d'un mélange TPU + PEBA toutes trois renforcées *in situ* par un MDI selon des quantités de 5, 10 et 20 parties en poids, respectivement, en comparaison d'une courbe témoin relative à ce seul mélange TPU + PEBA non renforcé,
la figure 29 est un graphique module élastique G' - température montrant quatre courbes correspondant respectivement au mélange témoin TPU + PEBA et aux trois compositions selon l'invention concernées par la figure 28 renforcées à des taux variables par du MDI,
les figures 30a et 30b sont deux clichés au microscope à force atomique montrant suivant des phases différentes la morphologie du mélange témoin TPU + PEBA qui est concerné par les figures 28 et 29,
les figures 30c et 30d sont deux clichés au microscope à force atomique montrant suivant des phases différentes la morphologie de la première composition TPU + PEBA renforcée par 5 parties de MDI,
les figures 30e et 30f sont deux clichés au microscope à force atomique montrant suivant des phases différentes la morphologie de la deuxième composition TPU + PEBA renforcée par 10 parties de MDI,
les figures 30g et 30h sont deux clichés au microscope à force atomique montrant suivant des phases différentes la morphologie de la troisième composition TPU + PEBA renforcée par 20 parties de MDI,
la figure 31 est un graphique contrainte-allongement montrant une courbe de composition extrudée à base d'un mélange PA 6 + PEBA renforcé selon l'invention par une résine époxy, en comparaison d'une courbe témoin relative à ce seul mélange PA 6 + PEBA non renforcé,
la figure 32 est un graphique contrainte-allongement montrant une courbe de composition extrudée selon l'invention à base d'un COPE renforcé par une époxy-amine, en comparaison d'une courbe témoin relative à ce COPE non renforcé,
les figures 33a et 33b sont deux clichés au microscope à force atomique montrant les morphologies de deux compositions extrudées selon l'invention à base d'un COPE renforcé par 25 parties en poids de résine époxy et par 35 parties en poids d'époxy-amine, respectivement, et
la figure 34 est un graphique illustrant la variation de la taille des nodules de cette composition à base d'un COPE en fonction de la quantité de résine époxy utilisée pour renforcer ce COPE.

Dans les exemples qui suivent, on a utilisé pour l'extrusion réactive une extrudeuse « bi-vis co-rotative » de dénomination « CLEXTRAL EVOLUM 032 » avec un profil de vis « P10 », une vitesse de rotation des vis comprise entre 250 et 350 tours/min, une vitesse du système de coupe comprise entre 800 et 1500 tours/min., et un profil de température à ajuster en fonction de la matrice thermoplastique choisie.

Cette extrudeuse comportait essentiellement une zone de transport (longueur L=16 mm et éléments de vis de type C2F), suivie d'une zone d'alimentation (L =120 mm et vis de type T2F), d'une zone de transport (L=96 mm et vis de type C2F), d'une zone de malaxage (L=240 mm et vis de type BL22), d'une zone de transport (L=208 mm et vis de type C2F), d'une zone de dispersion (L=48 mm et vis de type C2FF, avec un pas de 16 mm), d'une zone de malaxage (L=320 mm et vis de type BL22 puis BL33 puis BL20 puis BL00 puis BL20), d'une zone de transport (L=144 mm et vis de type C2F), d'une zone de dispersion (L=32 mm et vis de type C2FF, avec un pas de 16 mm), d'une zone de malaxage (L=64 mm et vis de type BL22) puis enfin d'une zone de transport (L=376 mm et vis de type C2F).

Concernant le premier mode de l'invention relatif au renforcement au moyen d'une époxy-amine, on a utilisé préférentiellement deux passes dans cette extrudeuse avec un temps de séjour d'environ 1 minute et 15 secondes, avec par exemple :
- pour la première passe, l'incorporation du ou des polymère(s) thermoplastique(s) par la trémie d'alimentation à 65° C par exemple dans la première zone d'alimentation, puis l'injection dans cette zone et à la même température de la résine époxy avec la pompe péristaltique ; et
- pour la seconde passe, l'incorporation du ou des polymère(s) thermoplastique(s) pré-chargés en résine époxy suite à la première passe, par cette trémie d'alimentation (en cette même zone d'alimentation à 65° C par exemple), puis l'injection dans cette zone et à la même température de l'agent réticulant amine avec la pompe péristaltique.

Les courbes de déformation de fluage en traction ont été établies conformément à la norme ISO 899-1, à 100° C et sur des éprouvettes de type 1A avec pour les figures 6, 14 et 23 des contraintes imposées respectivement de 2,5 MPa (i.e. 10 kg / éprouvette) ; de 5 MPa (i.e. 20 kg / éprouvette) et de 15 MPa (i.e. 60 kg / éprouvette).

La résistance au choc CHARPY à la température ambiante a été mesurée par le teste de Charpy selon la norme ISO 179-1 (2000) méthode 1eU, avec une énergie potentielle de 7,5 Joule.

Les caractéristiques de rhéologie (balayage en fréquence) ont été obtenues par un rhéomètre ARES à 180° C.

### EXEMPLES

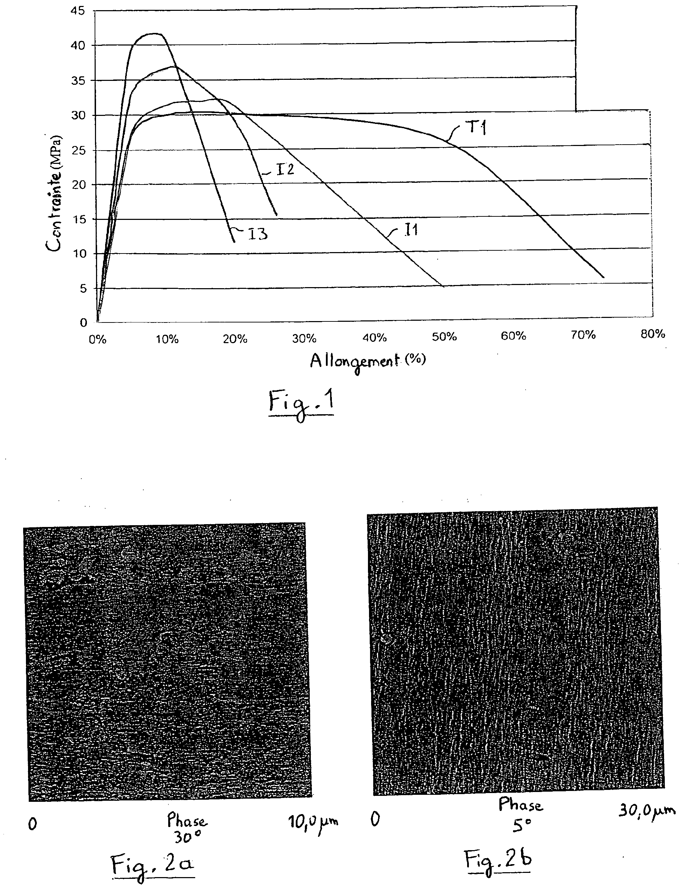

### 1) Renforcement d'un polyéthylène haute densité par une résine époxy et par un PDMS-SiH (voir figures 1-2b) :

Le tableau 1 ci-dessous rend compte de sept compositions selon le premier mode de l'invention I1 à I7 à base d'un PEHD et renforcées par une résine époxy éventuellement réticulée par une amine, en comparaison d'une composition témoin T1.

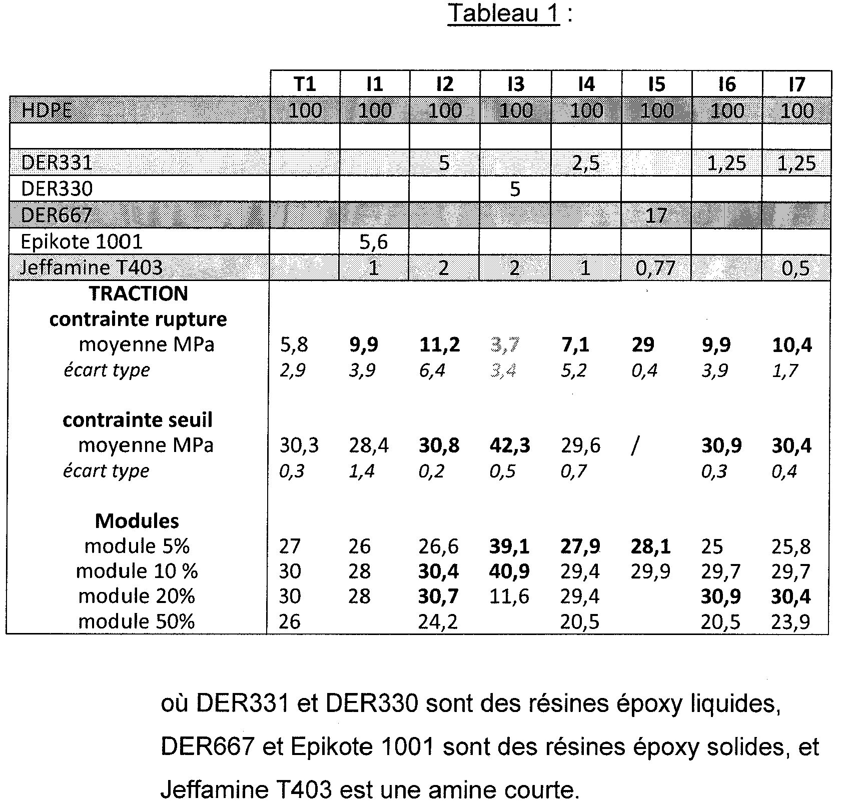

Ce tableau 1 montre une amélioration de la contrainte rupture, de la contrainte seuil et des modules par ajout de la résine époxy éventuellement réticulée *in situ* sous forme d'époxy-amine, étant précisé que nature et la quantité de cette résine époxy influe dans cette amélioration du renforcement. La figure 1 montre la supériorité des compositions I1, I2 et I3 par rapport au témoin T1, jusqu'à 20 % d'allongement.

Le tableau 2 ci-dessous montre par ailleurs l'amélioration des propriétés mécaniques d'une composition I8 à base d'un PEHD par ajout d'un PDMS-SiH (de dénomination « H-siloxane »), conformément au deuxième mode de l'invention.

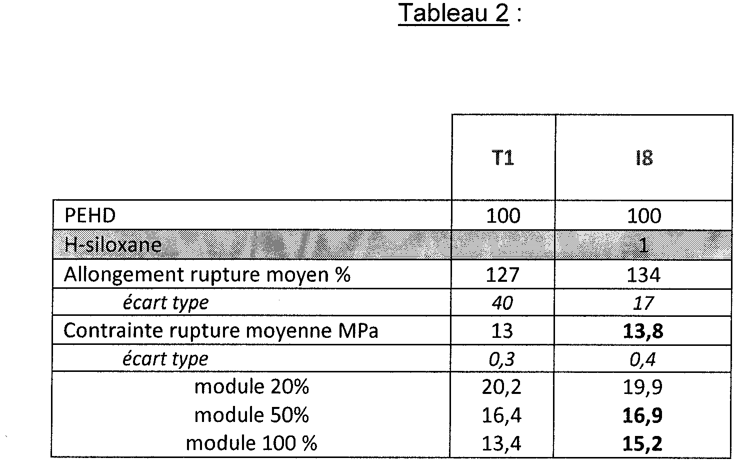

Le tableau 3 ci-dessous montre l'influence d'un agent compatibilisant du type polyoléfine greffée anhydride maléique, qui permet d'amélioration le renforcement par une compatibilisation des phases :

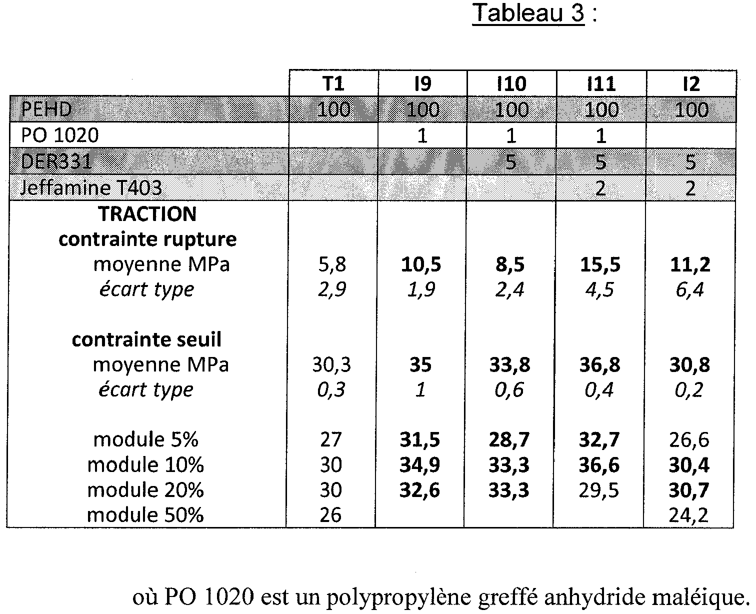

Le tableau 4 ci-dessous montre l'influence d'un recuit et d'une re-transformation de la matière :

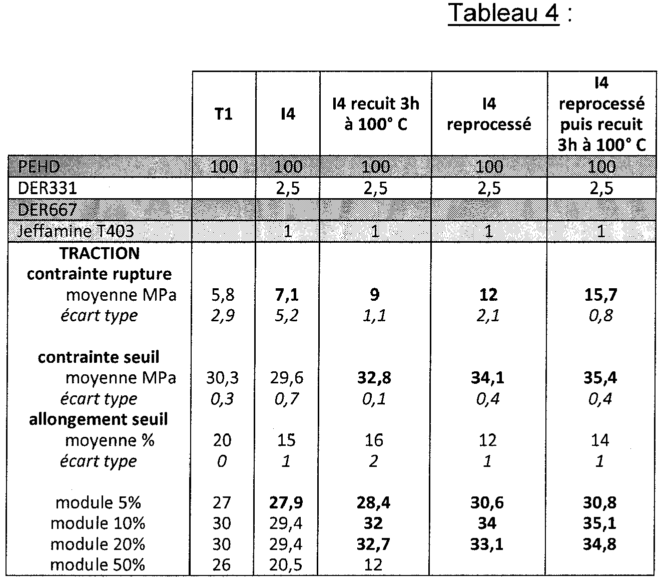

Le tableau 4 montre que ce recuit permet d'améliorer le renforcement, et que cette re-transformation (avec recuit ou non) permet de conserver voire d'améliorer ce renforcement.

La figure 2a montre que la composition I5 de l'invention, qui est obtenue dans un mélangeur interne, présente une morphologie lamellaire pour la dispersion de l'époxy-amine, et la figure 2b montre que la composition I1 de l'invention, qui est obtenue par extrusion, a l'époxy-amine dispersée sous forme de nodules de taille variant entre 600 nm et 5 µm environ, soit une taille moyenne en nombre de nodules inférieure à 5 µm avec un écart-type maximum de 0,5 µm.

Des mesures de rhéologie (par un balayage en fréquence à 200° C) ont par ailleurs montré une légère modification de la viscosité du polyéthylène par la phase discontinue de renforcement.

Quant au taux de cisaillement y moyen utilisé dans cet exemple, il était d'environ 1200 s⁻¹.

### 2) Renforcement d'un polypropylène par une résine époxy avec amine optionnelle, et par un PDMS-SiH (voir figures 3-6) :

Le tableau 5 ci-après montre des essais avec trois compositions I12, I13, I14 selon ledit premier à base d'un polypropylène de dénomination « PPH 3060 », en comparaison d'un témoin T2 uniquement constitué de ce polypropylène.

Ce tableau 5 montre une amélioration de l'allongement rupture, de la contrainte seuil et des modules en traction pour seulement 1,75 parties en poids d'époxy-amine, comme l'illustre la figure 3.

Quant à la morphologie de telles compositions à base de polypropylène renforcé par une résine époxy, elle est illustrée aux figures 4a (avec 3,5 parties en poids d'époxy-amine), 4b (avec 2,5 parties en poids de résine époxy) et 4c (avec 35 parties en poids d'époxy-amine), qui montrent la dispersion homogène de la résine époxy, seule ou réticulée, sous forme de nodules de taille allant de 100 nm à environ 3 µm soit une taille moyenne en nombre de nodules inférieure à 3 µm avec un écart-type maximum de 0,5 µm.

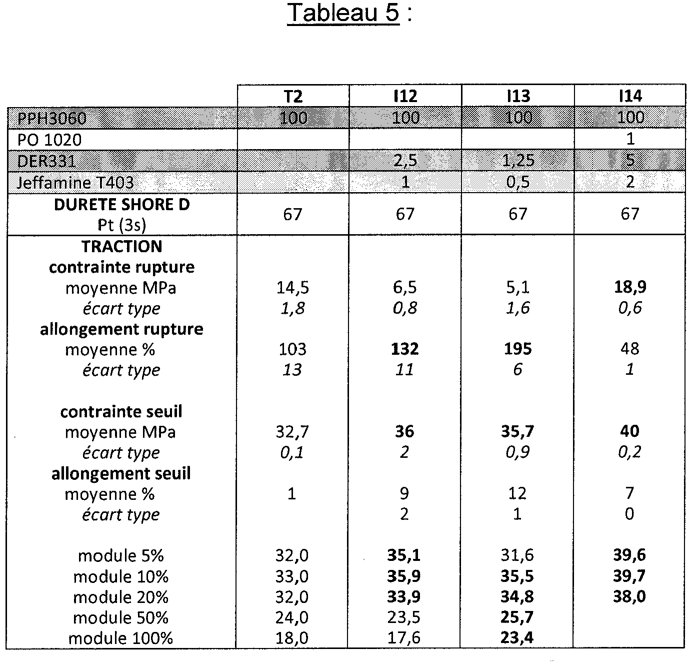

Le graphique de la figure 5 montre l'influence d'un recuit de 3 h à 120° C et d'une compatibilisation sur quatre autres compositions selon l'invention I15, I16, I17, I18 toutes à base du même polypropylène PPH 3060, de la même époxy-amine et comprenant en outre 1 partie en poids d'une polyoléfine greffée anhydride maléique (PO 1020), en comparaison de la composition témoin T2 (I15 et I17 comprennent 14 parties en poids d'époxy-amine avec un recuit pour I17 seulement, et I16 et I18 comprennent 28 parties en poids d'époxy-amine avec un recuit pour I18 seulement). On constate une amélioration des propriétés mécaniques par ajout de cet agent compatibilisant et par ce recuit, avec un déplacement du seuil (en contrainte et en déformation), une augmentation du module d'Young, ce qui montre un net impact de l'agent compatibilisant et du recuit.

On a par ailleurs procédé à des mesures montrant l'influence du profil d'extrusion sur une formulation PPH3060 + 1 partie en poids de PO 1020 + 7 parties en poids d'époxy-amine, qui ont montré en termes de courbes contrainte-allongement la supériorité du profil de vis P10 par rapport au profil de vis P9 pour ce qui est de l'amélioration de la contrainte seuil.

Comme illustré à la figure 6, des essais de fluage portant sur la composition I12 et sur une autre composition I19 (selon le deuxième mode de l'invention, étant renforcée par 1 partie en poids de H-siloxane), en comparaison de la composition témoin T2 et d'une autre composition témoin T3 (PPH + 30 % de fibres de verre), ont montré que la déformation en fluage des compositions I12 et I19 est divisée par un facteur 7 à 100° C par rapport à celle de la composition T2 et est comparable à celle de la composition T3.

Concernant les mesures de rhéologie réalisées sur ces compositions selon l'invention, elles témoignent d'une faible modification de la viscosité des PPH renforcés.

Quant au taux de cisaillement y moyen utilisé dans cet exemple, il était d'environ 1200 s⁻¹.

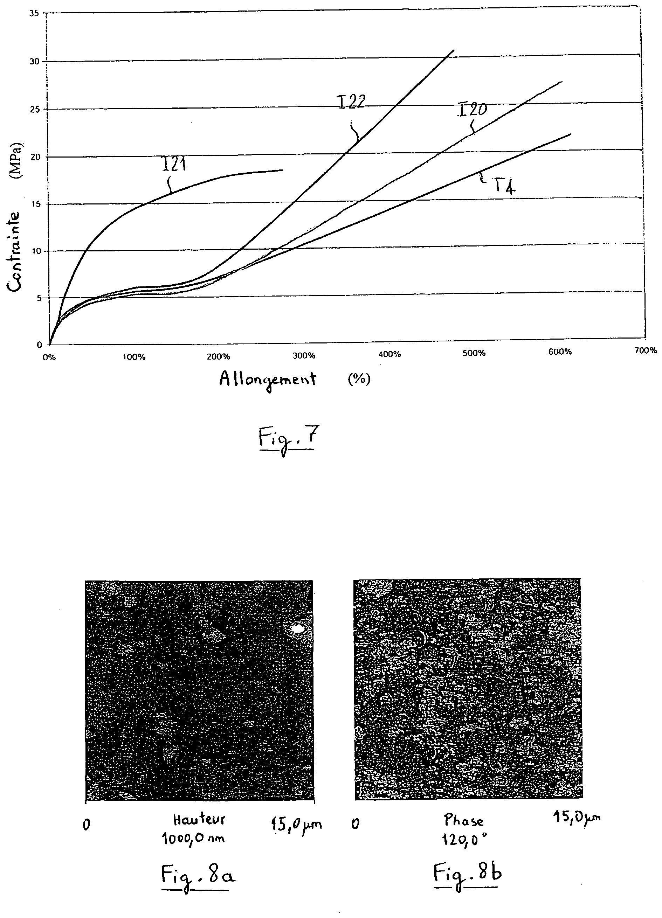

### 3) Renforcement d'un TPU par une résine époxy avec amine optionnelle, par un PDMS-SiH et par un MDI (voir figures 7-10b) :

Le tableau 6 ci-après rend compte d'essais réalisés sur trois autres compositions I20, I21 et I22 à base d'un TPU selon le premier mode de l'invention (I20 comprenant 5 parties en poids d'une résine époxy et I21 en outre 2 parties en poids d'une amine, soit 7 parties en poids d'une époxy-amine) et également selon le deuxième mode de l'invention pour I22 (qui contient 1 partie en poids de H-siloxane), en comparaison d'une composition témoin T4 constituée de ce seul TPU.

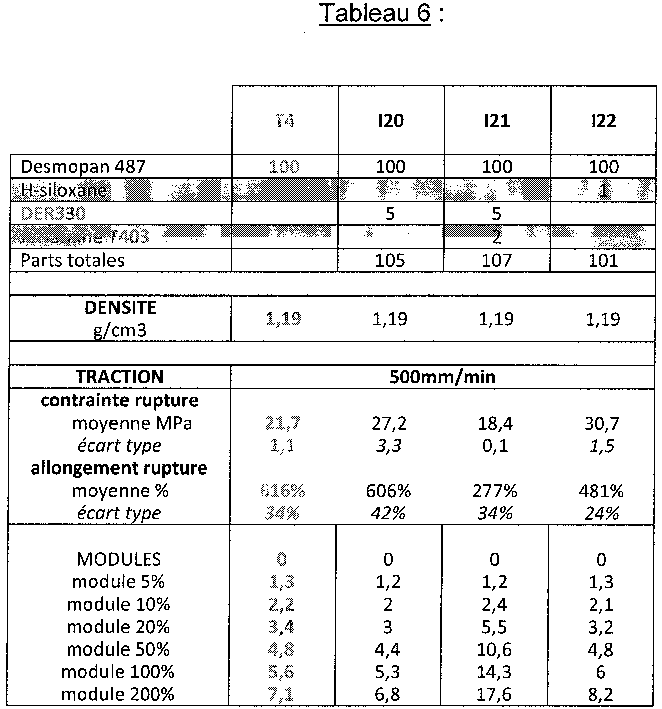

Ce tableau montre une augmentation de la contrainte rupture, des modules, de l'allongement à la rupture, et un effacement du seuil de plasticité par l'incorporation sous cisaillement selon l'invention d'époxy, d'époxy-amine ou d'un polyhydropolydiméthylsiloxane (voir figure 7).

Quant à la morphologie visible aux figures 8a et 8b, elle témoigne d'une dispersion de l'époxy-amine de la composition I21 sous forme de nodules de dimension moyenne en nombre inférieure à 3 µm, avec un écart-type maximum de 0,5 µm.

Concernant les propriétés dynamiques de ces compositions I20 à I22, on a mesuré un décalage important de la température de transition Tg, ainsi qu'une nette augmentation du module élastique entre 50° C et 150° C, un élargissement important de la gamme de température d'utilisation et de la température de ramollissement du matériau.

On a par ailleurs mis en évidence une augmentation de la viscosité du TPU par les polymères renforçants des compositions I20 à I22.

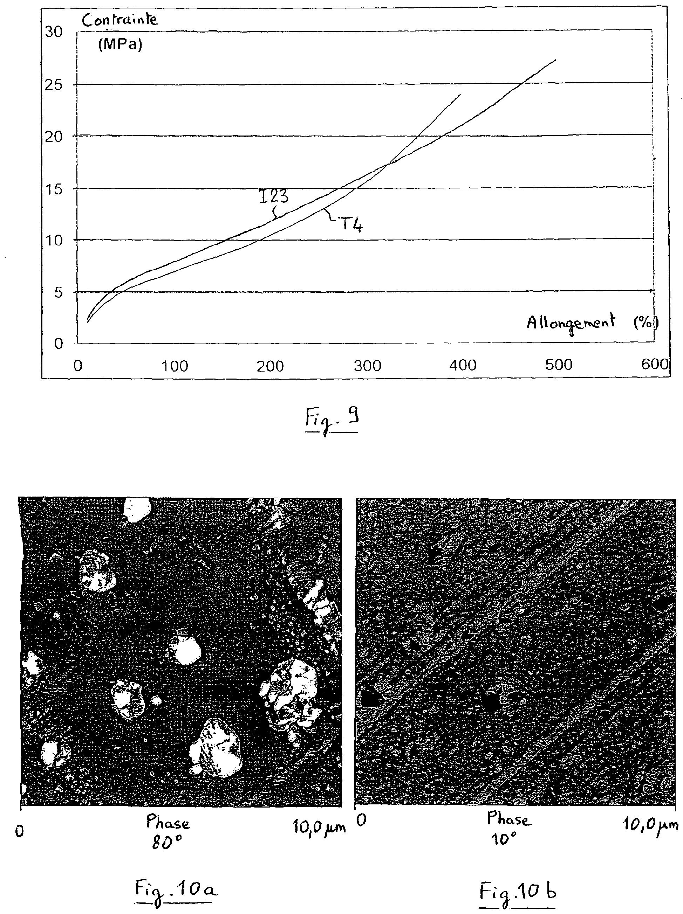

On a en outre réalisé des essais (voir tableau 7 ci-dessous et figure 9) avec une autre composition I23 selon le troisième mode de l'invention (dont la morphologie dispersée est visible aux figures 10a et 10b), toujours en comparaison de la composition témoin T4, qui montrent également une amélioration des propriétés mécaniques précitées. Cette composition I23 a été obtenue en mélangeur interne, en incorporant au TPU un polyisocyanate (MDI).

**Tableau 7 :**

| | | **T4** | **I23** |
|---|---|---|---|
| TPU Desmopan 487 | | 100 | 100 |
| | | | |
| MDI « Desmodur 44MCL » | | - | 5 |
| | | | |
| **TOTAL** | | 100 | 105 |
| | | | |
| Epaisseur | mm | 2,02 | 2,02 |
| Densité | - | 1,19 | 1,20 |
| Dureté Shore A 15s | Point | 87 | 87 |
| Contrainte rupture | MPa | 21,7 | 30,3 |
| écart type | | 2,7 | 4 |
| Allongement rupture | % | 616 | 545 |
| écart type | | 34 | 36 |
| | | | |
| module à 10% | MPa | 2,2 | 2,33 |
| module à 20% | MPa | 3,4 | 3,82 |
| module à 50% | MPa | 4,8 | 6,01 |
| module à 100% | MPa | 5,6 | 7,9 |
| module à 200% | MPa | 7,1 | 11,8 |
| | | | |
| Déchirement Delft | N | 85,7 | 109 |
| | | | |
| DRC 22H à 80° C | % | 80% | 73% |

Le tableau 8 ci-dessous détaille les paramètres rhéologiques de cette composition I23, en les comparant à ceux d'une autre composition I24 selon l'invention qui est également constituée du TPU additionné de MDI, mais qui a été obtenue par extrusion bi-vis.

On observe une légère modification des propriétés rhéologiques des matériaux. Toutefois, ces matériaux présentent toujours des paramètres de viscosité semblables à ceux des thermoplastiques, et conservent donc les propriétés de mise en oeuvre de ces thermoplastiques.

**Tableau 8 :**

| ARES 180°C | | T4 | I23 | I24 |
|---|---|---|---|---|
| K | Pa.s | 120000 | 219900 | 196800 |
| n | - | 0,18 | 0,14 | 0,15 |

Quant au taux de cisaillement y moyen utilisé dans cet exemple, il était d'environ 1700 s⁻¹.

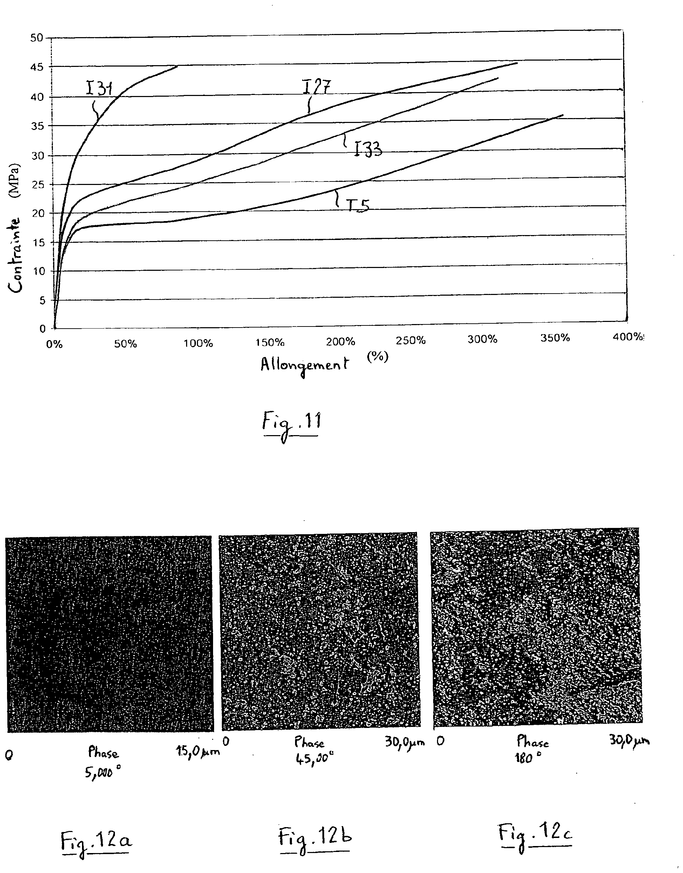

### 4) Renforcement d'un PEBA par une résine époxy avec amine optionnelle, par un PDMS-SiH et par un MDI (voir figures 11-19b) :

Les tableaux 9a et 9b ci-après (voir figure 11 pour le tableau 9a) rendent compte d'essais réalisés sur d'autres compositions extrudées I25 à I35 et I33', I33", I33'" selon le premier mode de l'invention, à base d'un PEBA « PEBAX 6333 » et d'une époxy-amine, excepté les compositions I26, I34 et I33"' à base d'une résine époxy non réticulée, en comparaison d'une composition témoin T5 constituée de ce seul PEBA.

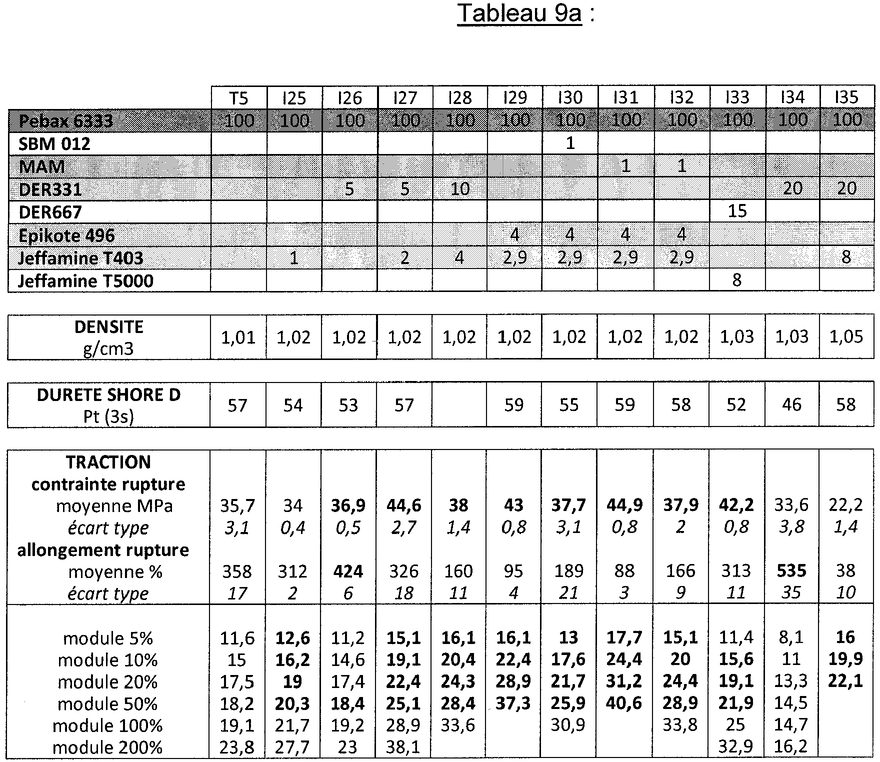

*(les propriétés améliorées par rapport au témoin T5 sont indiquées en gras)*

Ce tableau 9a montre une amélioration des propriétés mécaniques suivantes : augmentation de la contrainte rupture, des modules, de l'allongement à la rupture, et effacement du seuil de plasticité par incorporation sous cisaillement d'époxy ou d'époxy-amine.

Le tableau 9b ci-après rend compte d'essais réalisés, en comparaison de la même composition témoin T5, avec d'autres compositions selon l'invention I33', I33" et I33"' qui sont des variantes de la composition I33. Les formulations respectives de ces trois variantes étaient les suivantes :
- I33' : PEBA + époxy + 1 équivalent stoechiométrique de réticulant amine,
- I33" : PEBA + époxy + ½ équivalent stoechiométrique de réticulant amine, et
- I33"' : PEBA + époxy et sans réticulant amine.

**Tableau 9b :**

| | **T5** | **I33'** | **I33"** | **I33'"** |
|---|---|---|---|---|
| **Pebax 6333** | 100 | 100 | 100 | 100 |
| **DER 667** | | 15 | 15 | 15 |
| **Jeffamine T403** | | 0,68 | 0,34 | |
| **Parts totales** | **100** | **115,68** | **115,34** | **115,00** |
| | | | | |
| **DENSITE** g/cm3 | **1,01** | 1,03 | 1,03 | 1,04 |
| | | | | |

| **DURETE SHORE D** Pt (3s) | **57** | **59** | **59** | **58** |
|---|---|---|---|---|
| **TRACTION contrainte rupture** | | | | |
| moyenneMPa | **35,7** | **38,9** | **37,7** | 33 |
| *écart type* | ***3,1*** | *0,7* | *0,9* | *0,8* |

| **allongement rupture** | | | | |
|---|---|---|---|---|
| moyenne % | **358%** | 319% | 332% | 336% |
| *écart type* | ***17%*** | *7%* | 10% | 12% |
| | **0** | 0 | 0 | 0 |
| module 5% | **11,6** | **17,2** | **15,8** | **15,1** |
| module 10% | **15** | **21,6** | **20,4** | **18,6** |
| module 20% | **17,5** | **23,6** | **22,8** | **20,6** |
| module 50% | **18,2** | **23,4** | **23** | **20,6** |
| module 100% | **19,1** | **24,1** | **23,6** | **21,2** |
| module 200% | **23,8** | **28,7** | **27,4** | **24,7** |

Ce tableau 9b montre l'intérêt, pour améliorer les propriétés mécaniques d'une composition selon l'invention à base d'un PEBA (voir notamment la contrainte à la rupture des compositions I33' et I33" et l'ensemble des modules des compositions I33', I33" et I33"'), d'utiliser une résine époxy seule ou bien réticulée stoechiométriquement par une amine ou encore réticulée non stoechiométriquement par cette amine.

Quant à la morphologie des deux compositions selon l'invention I27 (voir figure 12b : avec 7 parties en poids d'époxy-amine) et I36 (voir figure 12c: renforcée selon le deuxième mode de l'invention avec 1 partie en poids de H-siloxane), on peut noter dans ces deux cas la présence de nodules dont la taille varie de quelques centaines de nanomètres à quelques micromètres, avec une taille moyenne en nombre inférieure à 5 µm pour un écart-type de 0,5 µm au maximum. Aux vues de ces clichés et des propriétés mécaniques précitées, il est clair que la phase discontinue renforçante (de dimension moyenne en nombre micrométrique voir submicronique avec l'écart-type maximum précité) et la matrice PEBA présentent une certaine cohésion sans même l'ajout d'agents compatibilisants, charges, ou autres réactifs chimiques, grâce aux contraintes de cisaillement et aux profils de vis et de températures précités.

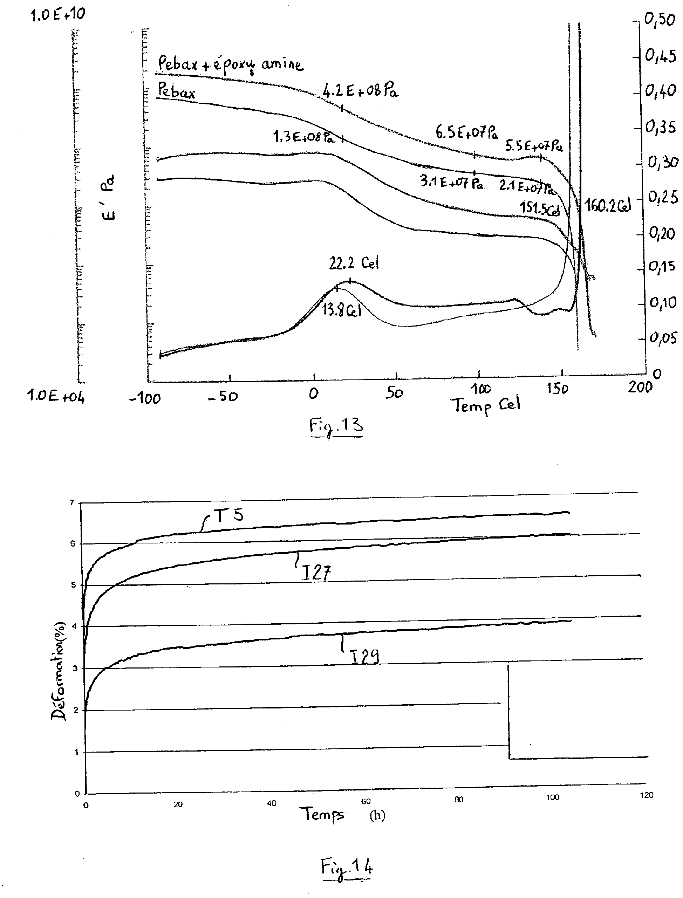

Comme visible à la figure 13, on a par ailleurs mis en évidence une amélioration des propriétés dynamiques du PEBA par son renforcement mis en oeuvre dans les compositions précitées, se traduisant par une augmentation des modules élastique et visqueux sur toute la gamme de température (de -100° C à 160° C), une modification de la transition vitreuse Tg (augmentation ou diminution en fonction de la nature de la résine), et une augmentation de la température de ramollissement.

Comme visible sur le graphique de déformation de fluage de la figure 14, on obtient jusqu'à 40 % de diminution de la déformation en fluage après 100 h à 100° C (voir la composition I29).

On a en outre mesuré la résistance aux chocs à la température ambiante (Test normalisé de Charpy) des compositions selon l'invention I25 et I28, comme visible au tableau 10 suivant, qui montre un gain d'environ 7 % en résistance aux chocs.

**Tableau 10 :**

| Echantillon | Résistance au choc acU (kJ/m²) |
|---|---|
| T5 | 130,7 |
| I25 | 138,8 |
| I28 | 139,8 |

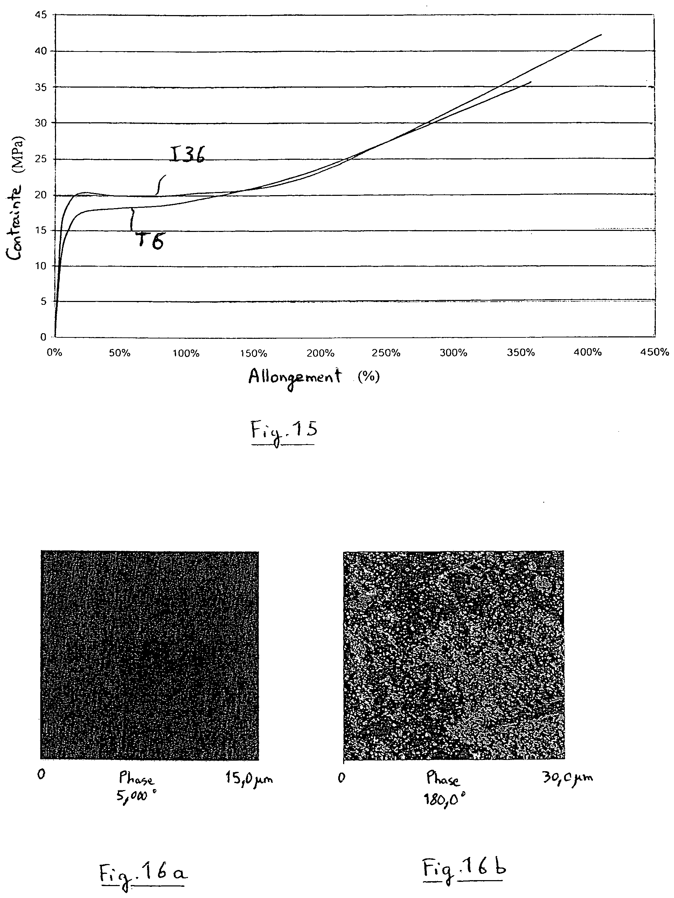

Le tableau 11 ci-après (voir figure 15) rend compte d'essais réalisés sur une autre composition extrudée I36 selon le deuxième mode de l'invention, à base d'un PEBA « PEBAX 6333 » et d'un PDMS-SIH de dénomination « V90 », en comparaison d'une composition témoin T6 constituée de ce seul PEBA.

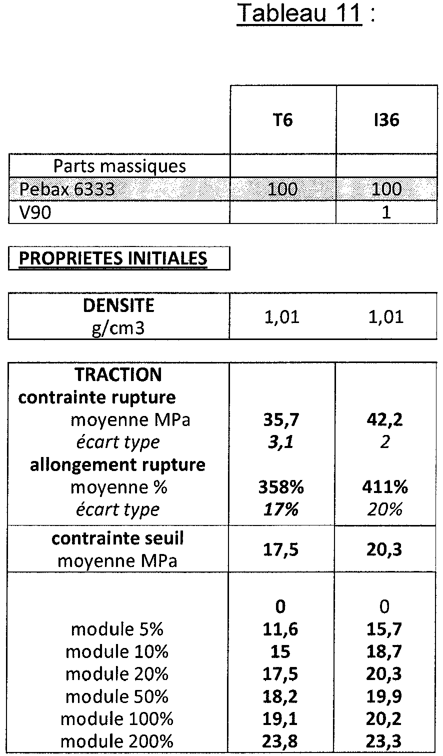

Ce tableau 11 montre un gain en contrainte seuil, en contrainte à la rupture et allongement à la rupture.

Quant à la morphologie de cette composition I36 selon l'invention qui est visible à la figure 16b par rapport au témoin T6 de la figure 16a, elle se caractérise par une dispersion dans la matrice PEBA de la phase renforçante PDMS-SiH sous forme de nodules de taille moyenne en nombre égale à 1 µm, avec un écart-type de 0,5 µm au maximum.

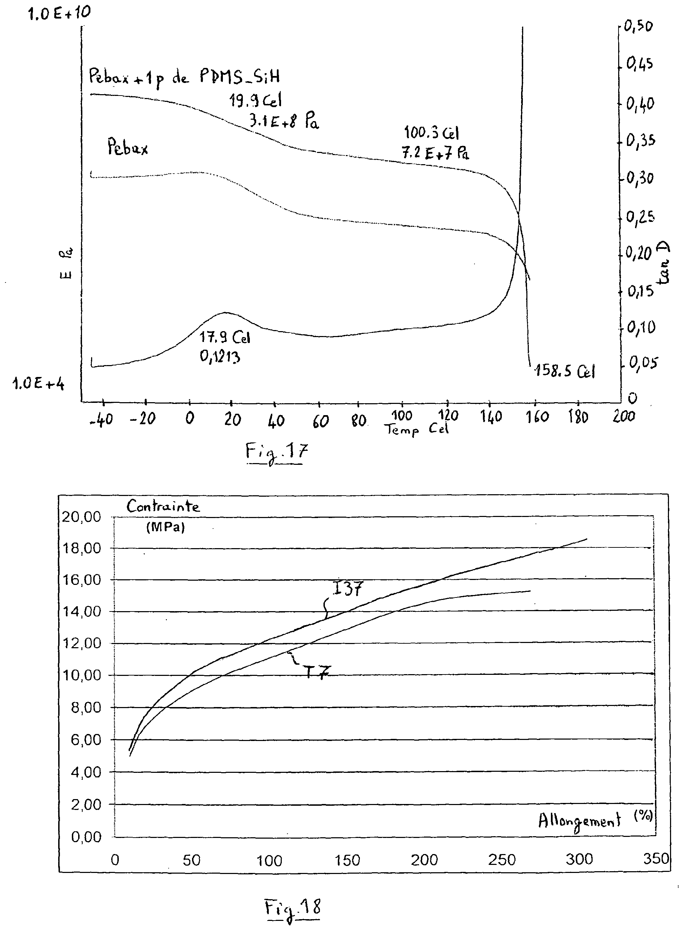

Les propriétés dynamiques de cette composition I36 visibles à la figure 17 montrent un net gain en modules sur toute la gamme de températures, une légère augmentation de la température de ramollissement et une modification intrinsèque de la matrice PEBA (décalage de la température Tg).

Le tableau 12 ci-après (voir figure 18) rend compte d'essais réalisés sur une autre composition extrudée I37 selon le troisième mode de l'invention, à base d'un PEBA « PEBAX 6333 » et d'un MDI, en comparaison d'une composition témoin T7 constituée de ce seul PEBA.

**Tableau 12 :**

| | | T7 | I37 |
|---|---|---|---|
| PEBA | | 100 | 100 |
| | | | |
| MDI Desmodur 44MCL | | - | 5 |
| | | | |
| **TOTAL** | | 100 | 105 |
| | | | |
| Epaisseur | mm | 1,96 | 1,99 |
| Densité | - | 1,01 | 1,03 |
| Contrainte rupture | MPa | 15,3 | 18,5 |
| écart type | | 0,7 | 0,3 |
| Allongement rupture | % | 270 | 306 |
| écart type | | 12 | 21 |
| | | | |
| module à 10% | MPa | 4,95 | 5,37 |
| module à 20% | MPa | 6,87 | 7,52 |
| module à 50% | MPa | 9,01 | 10,04 |
| module à 100% | MPa | 11,10 | 12,2 |
| module à 200% | MPa | 14,50 | 15,7 |
| | | | |
| Module secant à 1% | MPa | 104 | 103 |
| écart type | *MPa* | | 12 |
| | | | |
| Déchirement Delft | N | 95,7 | 107 |

Ce tableau 12 montre un gain en propriétés mécaniques de la composition I37 selon l'invention.

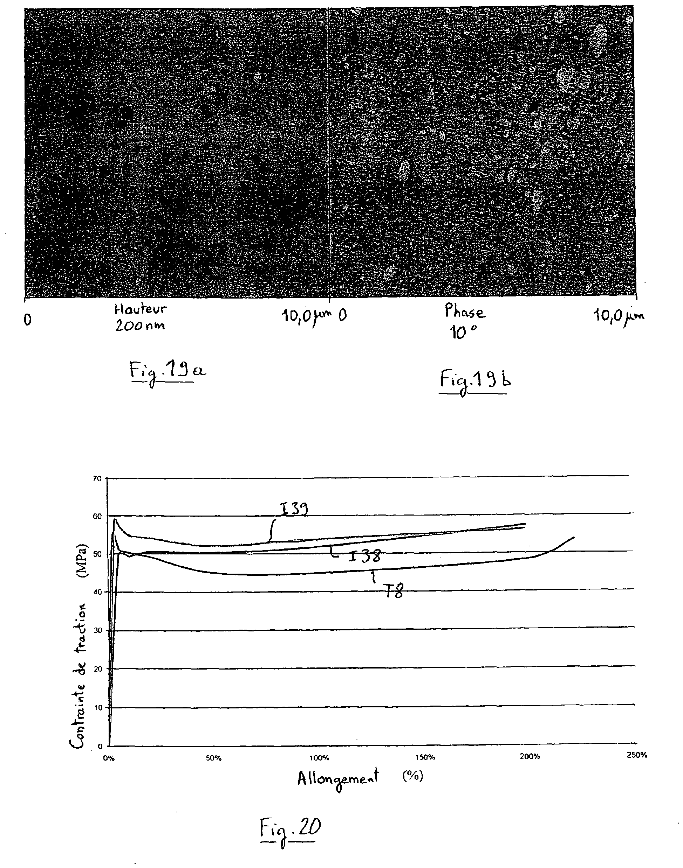

Quant à la morphologie de cette composition I37 visible aux figures 19a et 19b, elle montre la présence de nodules de MDI submicroniques, voire nanométriques en taille moyenne en nombre (avec l'écart-type maximum précité de 0,5 µm).

Le tableau 13 ci-dessous rend compte de mesures de rhéologie avec balayage en fréquence réalisées sur cette composition I37 :

**Tableau 13 :**

| ARES 180°C | | T7 | I37 |
|---|---|---|---|
| K | Pa.s | 6040 | 23212 |
| n | - | 0,65 | 0,5 |

Quant au taux de cisaillement y moyen utilisé dans cet exemple, il était d'environ 1270 s⁻¹.

### 5) Renforcement de polyamides (6, 11, 12) par une résine époxy avec amine optionnelle et par un PDMS-SiH (voir figures 20-25) :

Le tableau 14 ci-après (voir figure 20) rend compte d'essais réalisés sur deux autres compositions extrudées I38 et I39 selon le premier mode de l'invention, à base d'un PA 6 de dénomination « Akulon F136 DH » et d'une résine époxy « DER 331 », la composition I39 comprenant en outre une amine « T403 » pour son renforcement par une époxy-amine, en comparaison d'une composition témoin T8 constituée de ce seul PA 6.

Ce tableau 14 montre une augmentation des modules et des contraintes rupture, ainsi qu'une réduction du seuil d'écoulement par ajout d'époxy et d'époxy-amine.

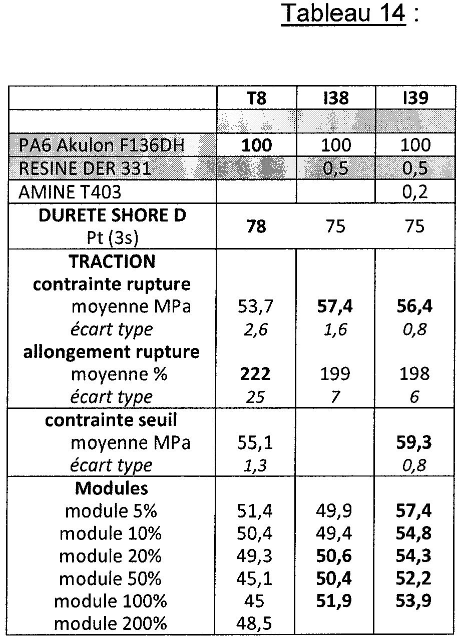

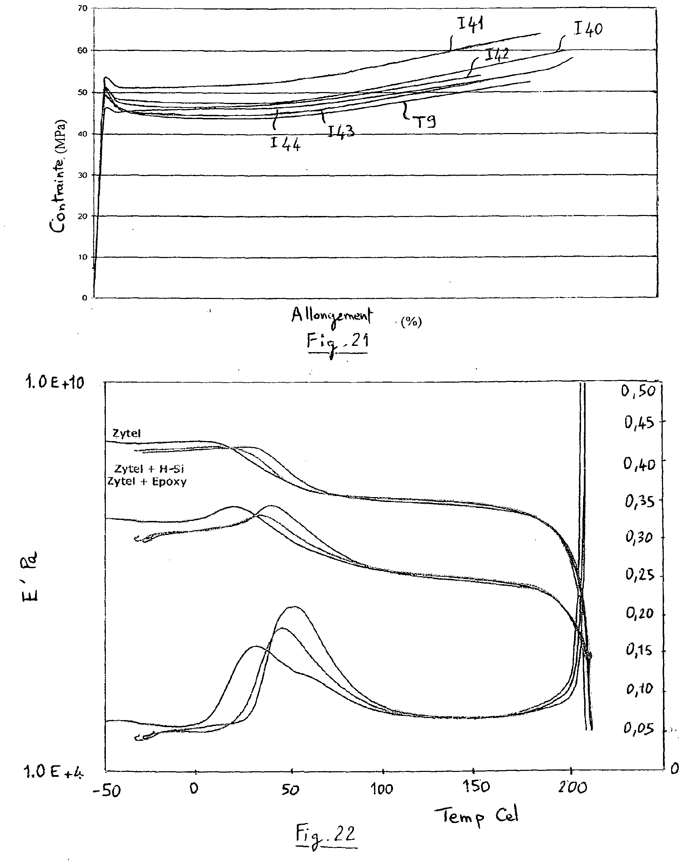

Le tableau 15 ci-après (voir figure 21) rend compte d'essais réalisés sur cinq autres compositions extrudées I40 à I44 selon l'invention, toutes à base d'un PA 6 de dénomination « Zytel BM 7300 », en comparaison d'une composition témoin T9 constituée de ce seul PA 6. Plus précisément, les compositions I40 et I41 sont renforcées à des taux variables par la seule résine époxy « DER 330 », la composition I42 par une époxy-amine à base de cette résine réticulée par une amine et les compositions I43 et I44 par du H-siloxane (i.e. PDMS-SIH).

Ce tableau 15 montre un gain en allongement et en contrainte rupture, ainsi qu'en modules et en modification du seuil de plasticité pour ces compositions de l'invention, par rapport au témoin T9.

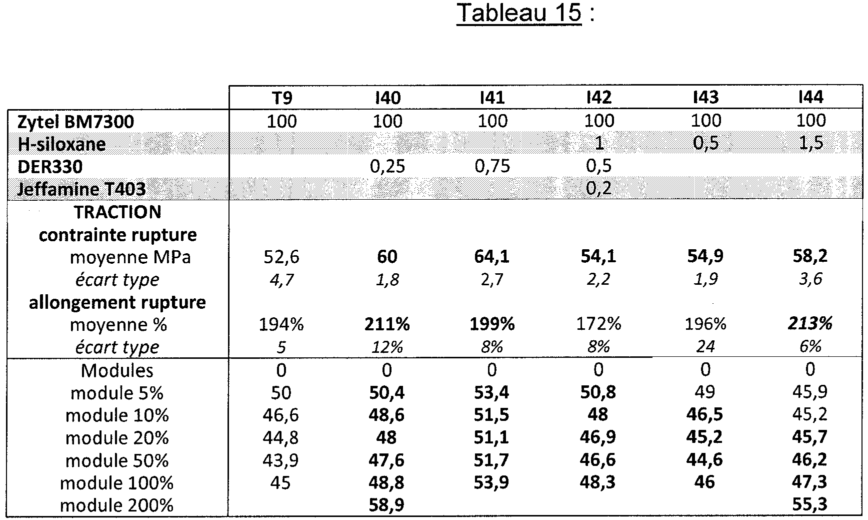

Concernant les propriétés dynamiques de ces compositions I40 à I44 selon l'invention, la figure 22 montre une modification intrinsèque du polyamide PA 6 tant pour l'utilisation de résine époxy que de PDMS-SiH à titre de polymère renforçant, avec une nette augmentation de la température de transition vitreuse Tg en particulier pour les échantillons des compositions I41 et I43.

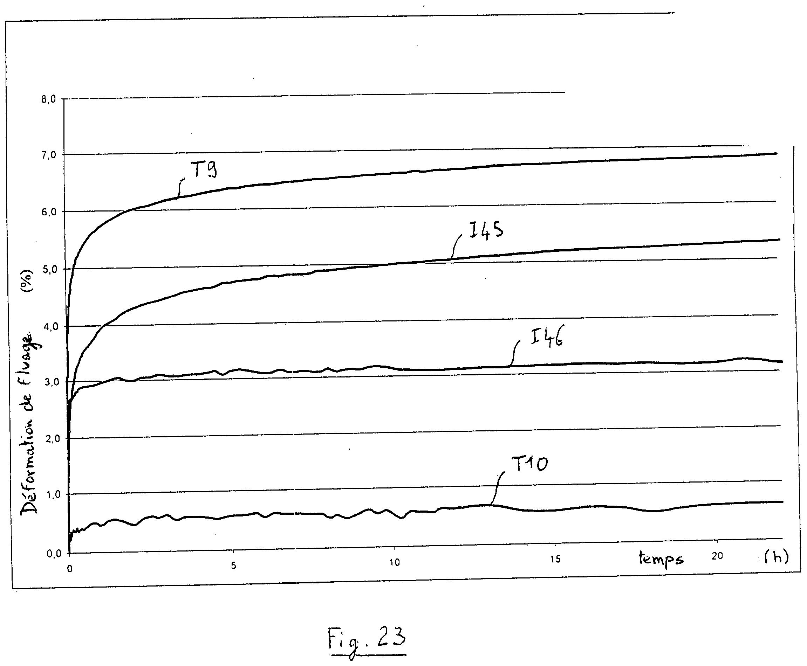

Le tableau 16 ci-après et la figure 23 correspondante montrent la diminution substantielle obtenue pour la déformation en fluage (après 20 heures sous 15 MPa de contrainte et à 100° C), par rapport à cette composition témoin T9 et à une autre composition témoin T10 à base de ce même PA 6 « Zytel BM 7300 » mais renforcée par 15 % de fibres de verre (ce qui est la référence de l'état de l'art pour un fluage minimisé) :
- d'une autre composition I45 selon l'invention à base de ce même PA 6 et seulement 0,5 partie en poids d'époxy-amine (i.e. 0,4 partie de résine « DER 331 » et 0,1 partie de Jeffamine T403 »), et
- d'une autre composition I46 selon l'invention à base de ce même PA 6 mais renforcée par 1 partie en poids de PDMS-SiH.

**Tableau 16 :**

| | Déformation en fluage après 20 h | Gain en déformation de fluage | Parties en poids de renforcement | Gain en fluage / parties en poids de renforcement |
|---|---|---|---|---|
| **T9** | 6,9 | - | - | - |
| **T10** | 0,64 | 6,26 | 15 | **0,42** |
| **I45** | 5,3 | 1,6 | 0,5 | **3,20** |
| **I46** | 3,13 | 3,77 | 1 | **3,77** |

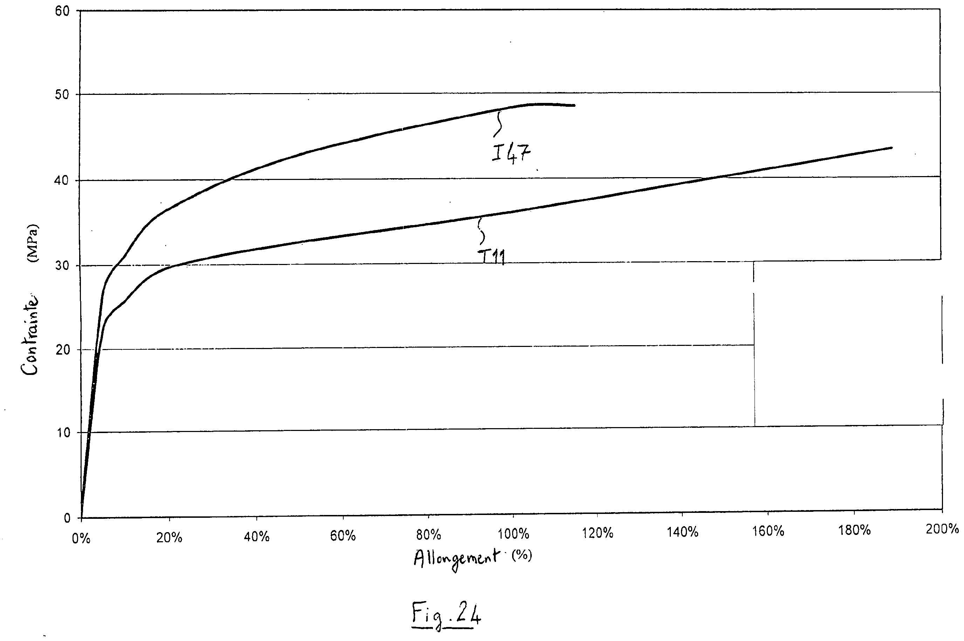

La figure 24 rend compte d'essais réalisés sur une autre composition I47 extrudée selon l'invention (avec une pression supérieure à 150 bars) à base d'un PA 11 de dénomination « Rilsan BESN P210TL » et renforcée par 1 partie en poids de résine époxy « DER 331 », en comparaison d'une composition témoin T11 constituée de ce seul PA 11. Cette figure 24 montre la supériorité mécanique de cette composition I47 renforcée selon le premier mode de l'invention.

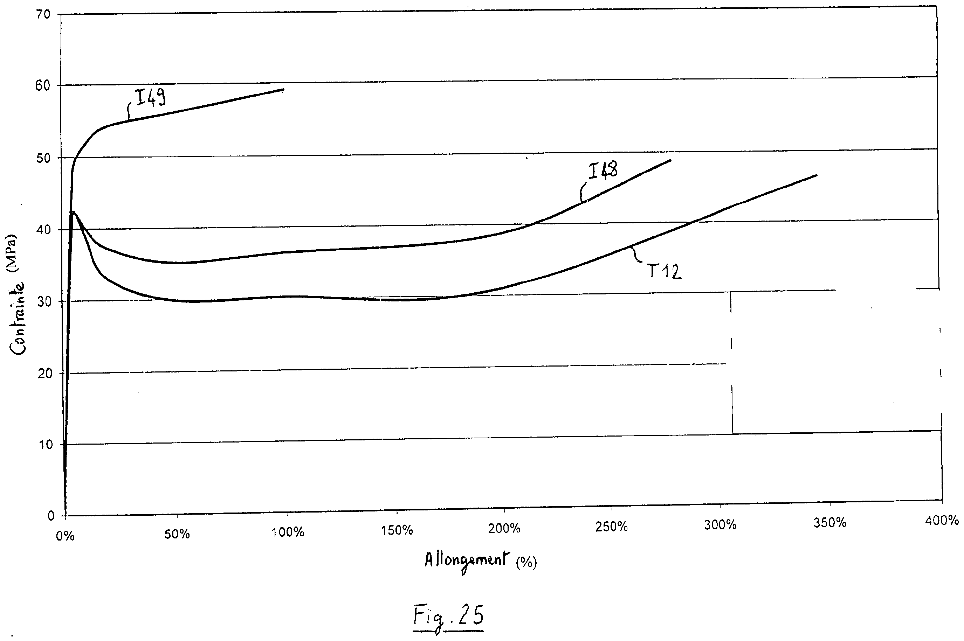

La figure 25 rend compte d'essais réalisés sur deux autres compositions I48 et I49 extrudées selon l'invention (avec une pression supérieure à 200 bars) qui sont toutes deux à base d'un PA 12 de dénomination « Rilsan AESN P202CTL » et renforcées par une résine époxy « DER 331 » (I48 et I49 étant respectivement renforcées par 1 partie en poids et par 2,5 parties en poids de cette résine époxy), en comparaison d'une composition témoin T12 constituée de ce seul PA 12. Cette figure 25 montre la supériorité mécanique de ces compositions I48 et I49 renforcées selon le premier mode de l'invention.

Quant au taux de cisaillement γ moyen utilisé dans cet exemple, il était d'environ 1690 s⁻¹.

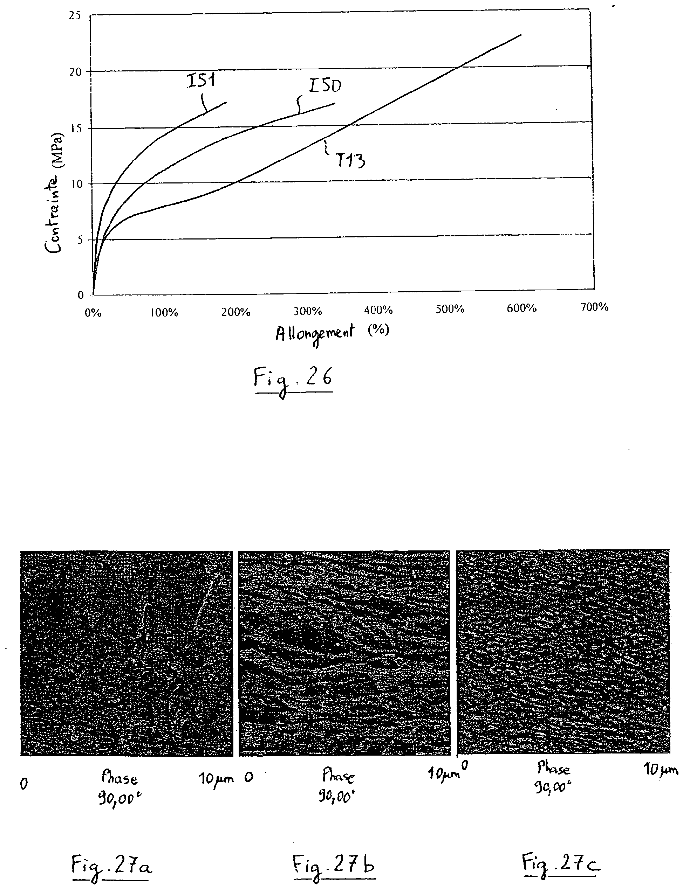

### 6) Renforcement d'un mélange TPU + PEBA par une époxy-amine et par un MDI (voir figures 26-30h) :

La figure 26 rend compte d'essais réalisés sur deux compositions I50 et I51 selon le premier mode l'invention toutes deux à base d'un mélange 50 % / 50 % de TPU « Desmopan 487 » + PEBA « Peba 4033 » (I50 étant renforcée par une époxy-amine, et I51 ayant le TPU et le PEBA qui sont chacun pré-renforcés par cette époxy-amine puis mélangés), en comparaison d'une composition témoin T13 constituée de ce seul mélange TPU + PEBA.

Cette figure 26 montre un changement radical du comportement des mélanges TPU + PEBA renforcés selon l'invention, avec un effacement du seuil de plasticité et une nette augmentation du domaine de déformation élastique.

Quant à la morphologie de ces compositions I50 et I51, on voit respectivement aux figures 27b et 27c qu'elle est modifiée de manière significative par rapport à celle du témoin T13 de la figure 27a, avec en particulier une nano-structuration de la matière pour la composition I51 où les deux constituants du mélange sont pré-renforcés avant d'être mélangés.

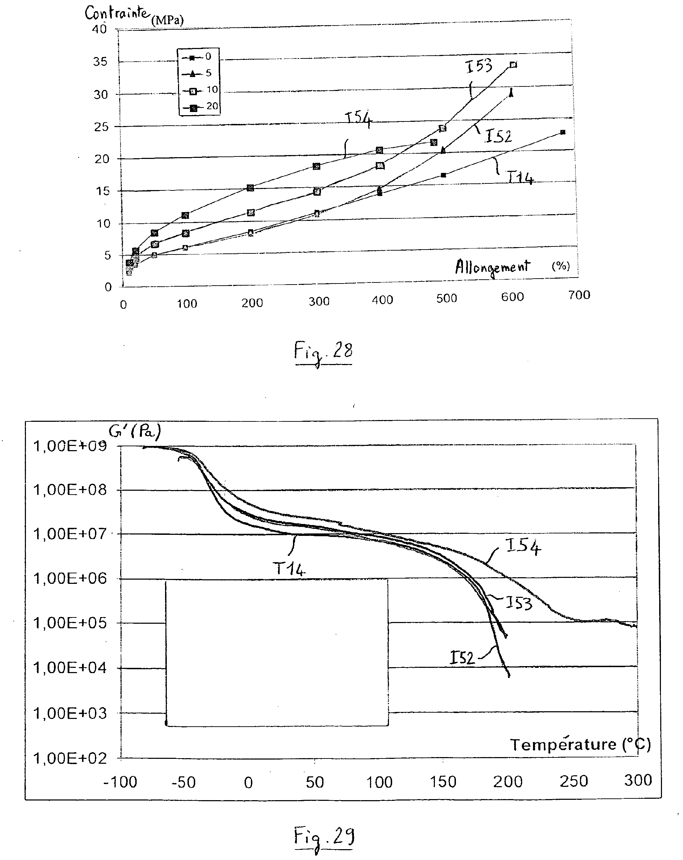

Le tableau 17 et la figure 28 rendent compte d'essais réalisés sur trois compositions I52, I53 et I54 selon le troisième mode de l'invention qui sont toutes trois à base d'un mélange TPU (« Desmopan 487 ») + PEBA (« PEBA 4033 ») qui sont chargées par du talc et qui sont renforcées par un diisocyanate (MDI « Desmodur 44MCL ») selon des quantités respectivement égales à 5, 10 et 20 parties en poids, en comparaison d'une composition témoin T14 constituée de ce seul mélange TPU + PEBA + talc.

Cette figure 28 montre une nette amélioration des propriétés mécaniques par ajout du polyisocyanate, avec le renforcement qui est ajustable par la quantité utilisée de ce polyisocyanate, ce renforcement étant globalement d'autant plus marqué que cette quantité est plus importante.

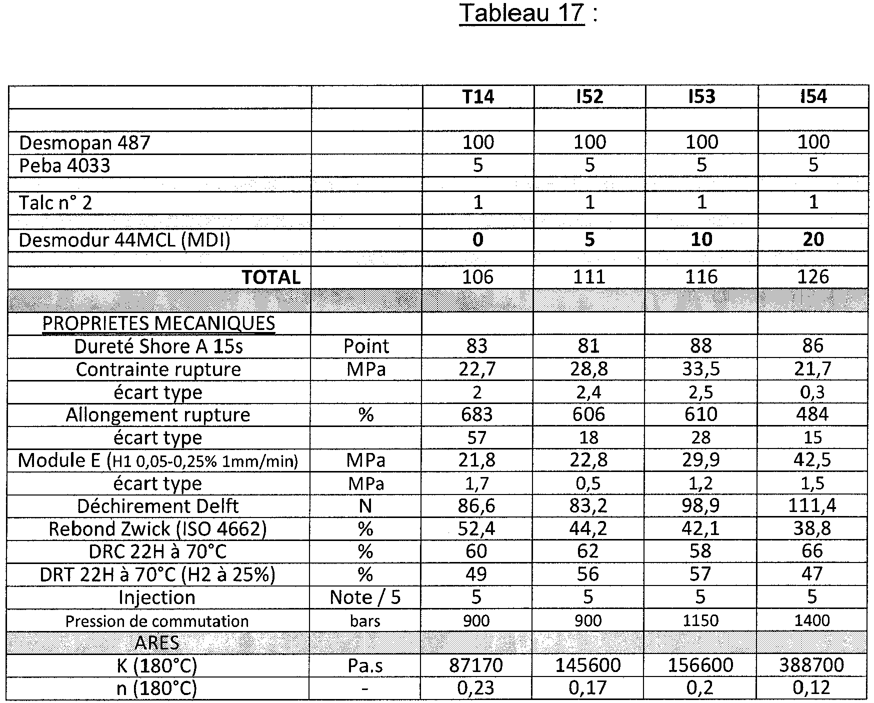

Par ailleurs, comme le montre le graphique de la figure 29, les mesures d'analyse mécanique dynamique réalisées sur ces compositions de l'invention ont montré que l'ajout de cet agent renforçant MDI permet d'augmenter significativement le module élastique des compositions I52 à I54 sur la majeure partie de la gamme de températures, et d'améliorer très significativement la température de ramollissement de la matière. La gamme de températures d'utilisation du matériau est ainsi augmentée de 100° C.

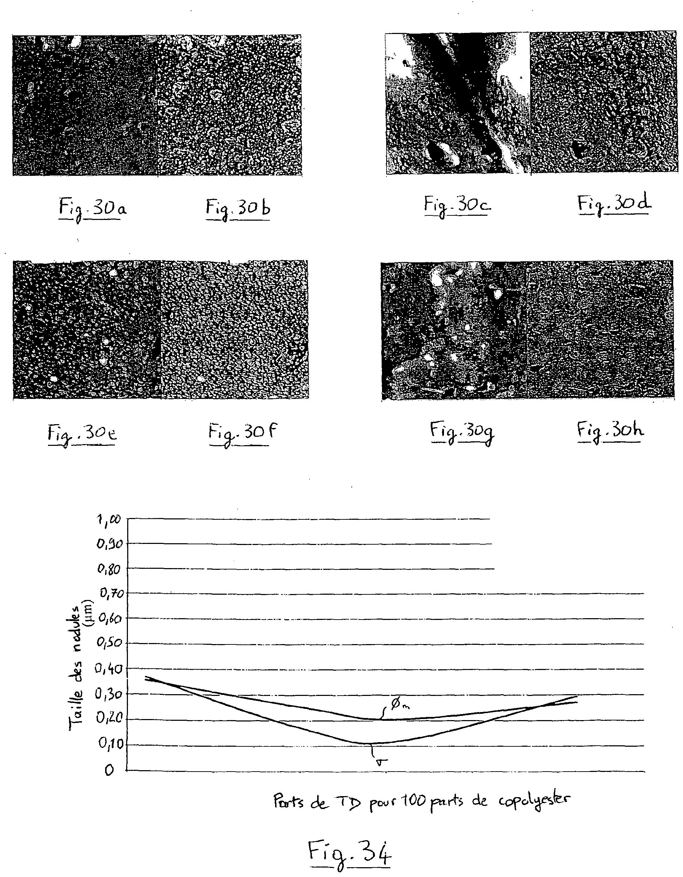

Quant aux morphologies des compositions I52, I53 et I54, les figures 30c à 30h qui les illustrent montrent les nodules obtenus qui sont finement dispersés et de manière homogène, en comparaison du témoin T14 des figures 30a et 30b, notamment grâce au taux de cisaillement très élevé utilisé dans l'extrudeuse et au profil de vis spécifique utilisé dans celle-ci.

Quant au taux de cisaillement y moyen utilisé dans cet exemple, il était d'environ 1130 s⁻¹.

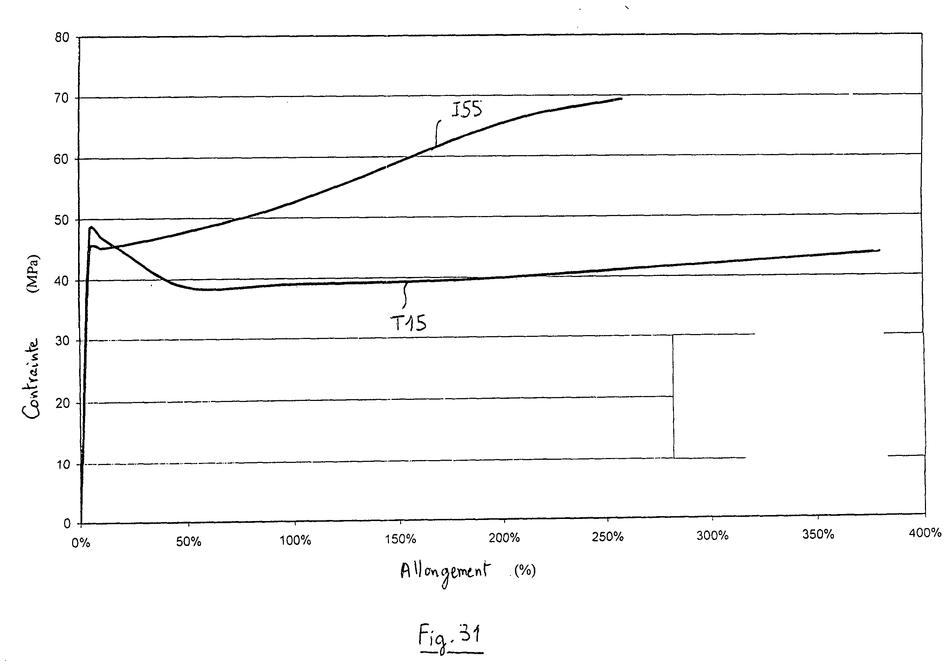

### 7) Renforcement d'un mélange polyamide (PA 6) + PEBA par une résine époxy (voir figure 31) :

La figure 31 rend compte d'essais réalisés sur une autre composition I55 selon le premier mode de l'invention, à base d'un mélange PA 6 + 10 % PEBA (« Pebax 6333 ») + 2,5 parties en poids de résine époxy « DER 331 », en comparaison d'une composition témoin T15 constituée de ce seul mélange PA 6 + PEBA (10 %).

Ces essais ont montré une nette augmentation de la contrainte à la rupture de cette composition I55 par rapport à la composition témoin T15.

Le taux de cisaillement y moyen utilisé dans cet exemple était d'environ 1470 s⁻¹.

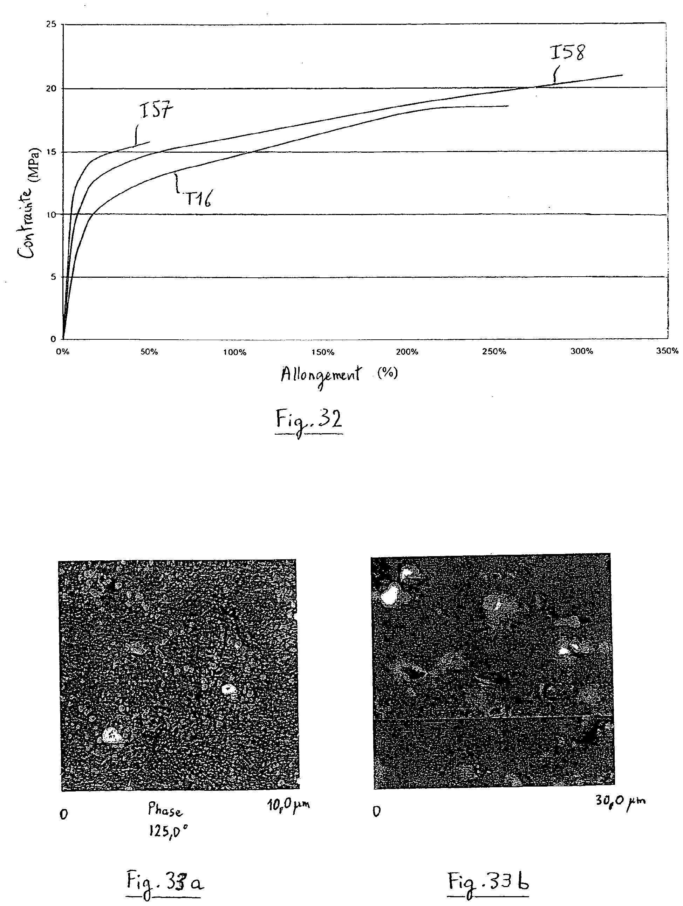

### 8) Renforcement d'un COPE par une résine époxy avec amine optionnelle (voir figures 32-33b) :

Le tableau 18 ci-dessous et la figure 32 rendent compte d'essais réalisés sur trois nouvelles compositions selon l'invention I56, I57 et I58 toutes trois à base d'un COPE (« Arnitel PM460 ») renforcé par une époxy-amine, en comparaison d'une composition témoin T16 constituée de ce seul COPE.

Ces essais montrent notamment une augmentation de la dureté, de la contrainte et de l'allongement à la rupture, ainsi que du module d'Young des compositions I56 et I57 par rapport à la composition témoin T16.

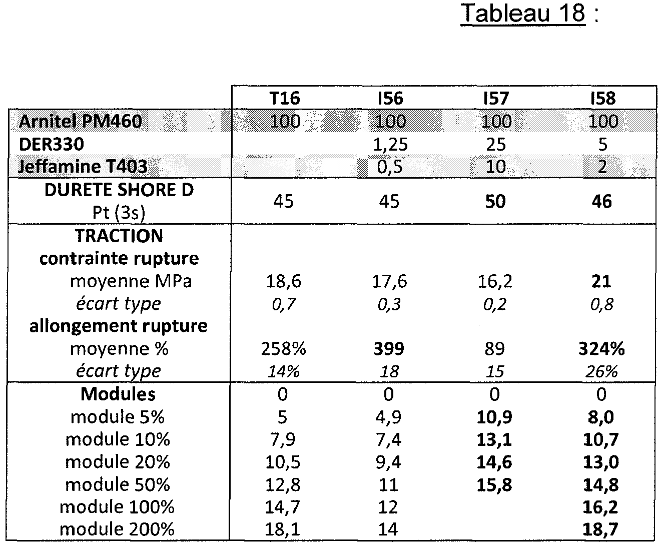

La figure 33b illustre la morphologie obtenue avec la composition I57 qui, en comparaison de celle obtenue avec une autre composition I59 selon l'invention à base du même COPE mais seulement renforcée par 25 parties en poids de la seule résine époxy « DER330 » non réticulée, montre que cette résine époxy se disperse dans la composition I59 sous forme de nodules de taille variant entre 100 nm et 3 µm et qu'après réticulation, cette résine est présente dans la composition I57 sous forme de nodules d'environ 5 µm de taille moyenne en nombre.

Le tableau 19 ci-dessous et la figure 34 qui lui est associée illustrent la variation de taille moyenne en nombre des nodules au sein de quatre compositions I60, I61, I62 et I63 à base de ce même COPE en fonction de la quantité de la même résine époxy utilisée (mesures réalisées par traitement d'image « AFM »). Comme cela est visible à la figure 34, on obtient pour les nodules des compositions I60 à I63 selon l'invention un diamètre moyen en nombre Φₘ réduit et un écart-type σ très faible (cet écart-type étant minimal pour environ 15 parties de résine pour 100 parties en poids de COPE).

**Tableau 19 :**

| Compositions de l'invention | Parts de résine époxy pour 100 parts de COPE | Diamètre moyen des nodules (µm) | Ecart type |
|---|---|---|---|
| I60 | 1,05 | 0,357 | 0,369 |
| I61 | 10,46 | 0,249 | 0,163 |
| I62 | 15,68 | 0,205 | 0,119 |
| I63 | 26,14 | 0,271 | 0,294 |

Quant au taux de cisaillement y moyen utilisé dans cet exemple, il était d'environ 1000 s⁻¹.

On notera en conclusion que les compositions selon la présente invention ne se limitent pas aux exemples présentés ci-dessus, et peuvent être à base de tous autres matériaux thermoplastiques renforcés via un greffage *in situ* par au moins une résine époxy, un polyorganosiloxane à groupe(s) fonctionnel(s) SiH ou un di- ou poly-isocyanate, pour autant que l'on réalise un mélangeage réactif selon le procédé décrit dans le présent jeu de revendications. Plus précisément en référence à l'ensemble des exemples ci-dessus, on a toujours sur certains tronçons des profils de vis d'extrusion des taux de cisaillement maxima supérieurs à 580 s⁻¹ et pouvant atteindre jusqu'à 3140 s⁻¹.

## Revendications

1. Procédé de préparation d'une composition thermoplastique réactive dépourvue de tout agent compatibilisant entre les phases comprenant une phase continue qui est à base d'au moins un polymère thermoplastique et dans laquelle est dispersée une phase discontinue majoritairement ou exclusivement constituée d'au moins un agent chimique de renforcement réactif pouvant être immiscible avec ledit au moins un polymère thermoplastique et choisi dans le groupe constitué par les résines époxy, les polyorganosiloxanes à groupe(s) fonctionnel(s) SiH, les di- ou poly-isocyanates et leurs mélanges, ce procédé étant **caractérisé en ce qu'**il comprend un greffage, une ramification et/ou une réticulation réalisés *in situ,* par un mélangeage réactif de ces phases avec un taux de cisaillement supérieur à 10³ s⁻¹, dudit au moins un agent de renforcement sur la chaîne dudit au moins un polymère thermoplastique, pour que ladite phase discontinue soit dispersée dans ladite phase continue sous forme de nodules présentant une taille moyenne en nombre, mesurée au microscope à force atomique, comprise entre 50 nm et 2 µm avec un écart-type maximum de 0,5 µm.

2. Procédé selon la revendication 1 , **caractérisé en ce que** l'on réalise ce mélangeage réactif sous une atmosphère non inerte et à une température supérieure d'au moins 30° C au point de fusion dudit polymère thermoplastique ou de celui desdits polymères thermoplastiques qui est le plus élevé.

3. Procédé selon la revendication 1 ou 2, **caractérisé en ce que** lors de ce mélangeage réactif on se passe de tout agent compatibilisant entre lesdites phases.

4. Procédé selon la revendication 1 ou 2, **caractérisé en ce que** lors de ce mélangeage réactif, on utilise au moins un agent compatibilisant entre ces phases qui est choisi dans le groupe constitué par les monomères, oligomères et polymères statistiques ou à blocs ayant au moins un groupe fonctionnel acrylate, méthacrylate ou amine et les polyoléfines greffées de préférence par un anhydride maléique, et **en ce que** cet agent compatibilisant est une polyoléfine greffée en particulier dans le cas où ledit au moins un polymère thermoplastique est polyoléfinique.

5. Procédé selon une des revendications précédentes, **caractérisé en ce que** l'on réalise ce mélangeage réactif dans une extrudeuse bi-vis de préférence co-rotative, en au moins une passe et avec un temps de séjour desdites phases compris entre 1 min. et 2 min, et **en ce que** l'on introduit ledit au moins un agent de renforcement dans i'extrudeuse au moyen d'une pompe par exemple péristaltique, suite à l'introduction dudit au moins un polymère thermoplastique.

6. Procédé selon une des revendications 1 à 4, **caractérisé en ce que** l'on réalise ce mélangeage réactif dans un mélangeur interne, en y introduisant simultanément ou non ledit au moins un polymère thermoplastique et ledit au moins un agent de renforcement.

7. Procédé selon une des revendications précédentes, **caractérisé en ce que** l'on utilise une résine époxy réticulée ou non pour ledit au moins un agent de renforcement selon une quantité comprise entre 0,5 et 60 parties en poids pour 100 parties de polymère(s) thermoplastique(s), cette résine époxy étant de préférence choisie dans le groupe constitué par les résines époxy bisphénol A, les résines époxy bisphénol F, les résines époxy glycol, les résines époxy bromées, les résines époxy novolaque , les résines époxy phénoliques, les résines époxy base vinyle et/ou glycidyl-éther, les monomères, oligomères et polymères à blocs de ces résines et leurs mélanges.

8. Procédé selon la revendication 7, **caractérisé en ce que** l'on se passe de tout système de réticulation de ladite résine époxy, laquelle réagit *in situ* par voie radicalaire avec ledit au moins un polymère thermoplastique à la manière d'un agent de terminaison.

9. Procédé selon la revendication 7, **caractérisé en ce que** l'on utilise un système de réticulation de ladite résine époxy qui est choisi dans le groupe constitué par les di- ou polyétheramines, les di- ou polydiméthylsiloxanes fonctionnalisés amine, les di- ou polyamines hydrocarbonées aliphatiques et aromatiques, les polyphénylène sulfone amines, les di- ou polyanhydrides et les di-ou polycyanamides.

10. Procédé selon une des revendications 1 à 6, **caractérisé en ce que** l'on utilise pour ledit au moins un agent de renforcement :
- un polyorganosiloxane à groupes fonctionnels SiH le long de la chaîne ou en extrémités de chaîne, selon une quantité comprise entre 0,1 et 40 parties en poids pour 100 parties de polymère(s) thermoplastique(s), ou
- un di- ou poly-isocyanate selon une quantité comprise entre 0,5 et 30 parties en poids pour 100 parties de polymère(s) thermoplastique(s), ce di- ou polyisocyanate étant de préférence choisi dans le groupe constitué par le diphénylméthane-4,4'-diisocyanate (MDI), le toluène-2,4-diisocyanate (TDI), l'hexaméthylène-1,6-diisocyanate (HDI), le polyméthylène polyphényl isocyanate (PMPPI) et leurs mélanges.

11. Composition thermoplastique réactive, utilisable pour former un système réactif choisi dans le groupe constitué par les systèmes compatibilisants entre phases, les systèmes d'ensimage de fibres dans des composites et les systèmes de dispersion de charges dans des phases thermoplastiques, la composition comprenant une phase continue qui est à base d'au moins un polymère thermoplastique et dans laquelle est dispersée une phase discontinue majoritairement ou exclusivement constituée d'au moins un agent chimique de renforcement réactif pouvant être immiscible avec ledit au moins un polymère thermoplastique et choisi dans le groupe constitué par les résines époxy, les polyorganosiloxanes à groupe(s) fonctionnel(s) SiH, les di- ou poly-isocyanates et leurs mélanges, cette composition étant **caractérisée en ce qu'**elle est dépourvue de tout agent compatibilisant entre lesdites phases et comprend le produit d'une réaction *in situ* de greffage, de ramification et/ou de réticulation, par un mélangeage réactif de ces phases sous un taux de cisaillement supérieur à 10³ s⁻¹, dudit au moins un agent de renforcement sur la chaîne dudit au moins un polymère thermoplastique, de sorte que ce(s) dernier(s) présente(nt) par cette réaction une structure greffée, ramifiée et/ou réticulée, ladite phase discontinue étant dispersée dans ladite phase continue sous forme de nodules de taille moyenne en nombre, mesurée au microscope à force atomique, comprise entre 50 nm et 2 µm avec un écart-type maximum de 0,5 µm.

12. Composition selon la revendication 11, **caractérisée en ce que** ledit au moins un agent de renforcement comprend une résine époxy réticulée ou non selon une quantité comprise entre 0,5 et 60 parties en poids pour 100 parties de polymère(s) thermoplastique(s), cette résine époxy étant de préférence choisie dans le groupe constitué par les résines époxy bisphénol A, les résines époxy bisphénol F, les résines époxy glycol, les résines époxy bromées, les résines époxy novolaque, les résines époxy phénoliques, les résines époxy base vinyle et/ou glycidyl-éther, les monomères, oligomères et polymères à blocs de ces résines et leurs mélanges.

13. Composition selon la revendication 12, **caractérisée en ce qu'**elle est dépourvue de tout système de réticulation de ladite résine époxy, laquelle réagit *in situ* par voie radicalaire avec ledit au moins un polymère thermoplastique à la manière d'un agent de terminaison.

14. Composition selon la revendication 12, **caractérisée en ce qu'**elle comprend un système de réticulation de ladite résine époxy qui est choisi dans le groupe constitué par les di- ou polyétheramines, les di- ou polydiméthylsiloxanes fonctionnalisés amine, les di- ou polyamines hydrocarbonées aliphatiques et aromatiques, les polyphénylène sulfone amines, les di- ou polyanhydrides et les di-ou polycyanamides.

15. Composition selon la revendication 11, **caractérisée en ce que** ledit au moins un agent de renforcement comprend :
- un polyorganosiloxane à groupes fonctionnels SiH le long de la chaîne ou en extrémités de chaîne, selon une quantité comprise entre 0,1 et 40 parties en poids pour 100 parties de polymère(s) thermoplastique(s), ou
- un di- ou poly-isocyanate selon une quantité comprise entre 0,5 et 30 parties en poids pour 100 parties de polymère(s) thermoplastique(s), ce di- ou polyisocyanate étant de préférence choisi dans le groupe constitué par le diphénylméthane-4,4'-diisocyanate (MDI), le toluène-2,4-diisocyanate (TDI), l'hexaméthylène-1,6-diisocyanate (HDI), le polyméthylène polyphényl isocyanate (PMPPI) et leurs mélanges.

16. Composition selon une des revendications 11 à 15, **caractérisée en ce que** :
- ladite phase continue est à base d'au moins un polyéther bloc amide (PEBA), ladite phase discontinue étant à base d'au moins une résine époxy et de préférence d'un système de réticulation de type amine, ou
- ladite phase continue est à base d'un polyuréthanne thermoplastique (TPU), ladite phase discontinue étant à base d'au moins un polyorganosiloxane à groupe(s) fonctionnel(s) SiH ou d'un di- ou polyisocyanate, ou bien
- ladite phase continue est à base d'un mélange d'au moins un polyéther bloc amide (PEBA) et d'un polyuréthanne thermoplastique (TPU), ladite phase discontinue étant à base soit d'au moins une résine époxy et de préférence d'un système de réticulation de type amine, soit d'un di- ou polyisocyanate, ou encore **en ce que**
- ladite phase continue est à base d'un polyamide, ladite phase discontinue étant à base d'au moins une résine époxy et de préférence d'un système de réticulation amide avec ou sans agent à blocs amine, acrylate ou méthacrylate.

## Patentansprüche

1. Verfahren zur Herstellung einer reaktiven thermoplastischen Zusammensetzung ohne jeglichen Verträglichmacher zwischen den Phasen, umfassend eine kontinuierliche Phase, die auf mindestens einem thermoplastischen Polymer basiert und in der eine diskontinuierliche Phase dispergiert ist, die überwiegend oder ausschließlich aus mindestens einem chemischen reaktiven Verstärkungsmittel besteht, das mit dem mindestens einen thermoplastischen Polymer unmischbar sein kann und ausgewählt ist aus der Gruppe bestehend aus Epoxyharzen, Polyorganosiloxanen mit (einer) funktionellen SiH-Gruppe(n), Di- oder Polyisocyanaten und Mischungen davon, wobei das Verfahren **dadurch gekennzeichnet ist, dass** es eine *in situ* durchgeführte Pfropfung, Verzweigung und/oder Vernetzung durch ein reaktives Vermischen dieser Phasen bei einer Scherrate von mehr als 10³ s⁻¹ des mindestens einen Verstärkungsmittels an die Kette des mindestens einen thermoplastischen Polymers umfasst, um die diskontinuierliche Phase in Form von Klümpchen, die ein mittels eines Rasterkraftmikroskops gemessenes Zahlenmittel der Größe zwischen 50 nm und 2 µm mit einer maximalen Standardabweichung von 0,5 µm aufweisen, in der kontinuierlichen Phase zu dispergieren.

2. Verfahren nach Anspruch 1, **dadurch gekennzeichnet, dass** das reaktive Vermischen in einer nicht inerten Atmosphäre und bei einer Temperatur durchgeführt wird, die um mindestens 30 °C höher als der Schmelzpunkt des thermoplastischen Polymers oder desjenigen der thermoplastischen Polymere ist, je nachdem, welche am höchsten ist.

3. Verfahren nach Anspruch 1 oder 2, **dadurch gekennzeichnet, dass** beim reaktiven Vermischen kein Verträglichmacher zwischen den Phasen vorhanden ist.

4. Verfahren nach Anspruch 1 oder 2, **dadurch gekennzeichnet, dass** beim reaktiven Vermischen mindestens ein Verträglichmacher zwischen den Phasen verwendet wird, der ausgewählt ist aus der Gruppe bestehend aus Monomeren, Oligomeren und statistischen oder Blockpolymeren mit mindestens einer funktionellen Acrylat-, Methacrylat- oder Amingruppe und Polyolefinen, die vorzugsweise mit einem Maleinsäureanhydrid gepfropft sind, und dadurch, dass es sich beim Verträglichmacher insbesondere in dem Fall, in dem das mindestens eine thermoplastische Polymer polyolefinisch ist, um ein gepfropftes Polyolefin handelt.

5. Verfahren nach einem der vorhergehenden Ansprüche, **dadurch gekennzeichnet, dass** das reaktive Vermischen in einem Doppelschneckenextruder vorzugsweise mit gleichsinniger Drehung in mindestens einem Durchgang und mit einer Verweilzeit der Phasen zwischen 1 Minute und 2 Minuten erfolgt und dadurch, dass das mindestens eine Verstärkungsmittel nach der Einführung des mindestens einen thermoplastischen Polymers mittels einer Pumpe, beispielsweise einer Schlauchpumpe, in den Extruder eingeführt wird.

6. Verfahren nach einem der Ansprüche 1 bis 4, **dadurch gekennzeichnet, dass** das reaktive Vermischen in einem Innenmischer durchgeführt wird, indem das mindestens eine thermoplastische Polymer und das mindestens eine Verstärkungsmittel gleichzeitig darin eingeführt werden oder nicht.

7. Verfahren nach einem der vorhergehenden Ansprüche, **dadurch gekennzeichnet, dass** ein Epoxyharz, das vernetzt ist oder nicht, als das mindestens eine Verstärkungsmittel in einer Menge zwischen 0,5 und 60 Gew.-Teilen auf 100 Teile des (der) thermoplastischen Polymers (Polymere) verwendet wird, wobei das Epoxyharz vorzugsweise ausgewählt ist aus der Gruppe bestehend aus Bisphenol-A-Epoxyharzen, Bisphenol-F-Epoxyharzen, Glycolepoxyharzen, bromierten Epoxyharzen, Novolak-Epoxyharzen, Phenol-Epoxyharzen, Epoxyharzen auf Basis von Vinyl und/oder Glycidylether, Monomeren, Oligomeren und Blockpolymeren dieser Harze und Mischungen davon.

8. Verfahren nach Anspruch 7, **dadurch gekennzeichnet, dass** kein Vernetzungssystem für das Epoxyharz verwendet wird, wobei das Epoxyharz mit dem mindestens einen thermoplastischen Polymer *in situ* radikalisch wie ein Abbruchmittel reagiert.

9. Verfahren nach Anspruch 7, **dadurch gekennzeichnet, dass** ein Vernetzungssystem des Epoxyharzes verwendet wird, das ausgewählt ist aus der Gruppe bestehend aus Di- oder Polyetheraminen, aminfunktionalisierten Di- oder Polydimethylsiloxanen, aliphatischen und aromatischen Kohlenwasserstoffdi- oder Kohlenwasserstoffpolyaminen, Polyphenylensulfonaminen, Di- oder Polyanhydriden und Di- oder Polycyanamiden.

10. Verfahren nach einem der Ansprüche 1 bis 6, **dadurch gekennzeichnet, dass** als das mindestens eine Verstärkungsmittel verwendet wird:
- ein Polyorganosiloxan mit funktionellen SiH-Gruppen entlang der Kette oder an den Enden der Kette in einer Menge zwischen 0,1 und 40 Gew.-Teilen auf 100 Teile des (der) thermoplastischen Polymers (Polymere) oder
- ein Di- oder Polyisocyanat in einer Menge zwischen 0,5 und 30 Gew.-Teilen auf 100 Teile des (der) thermoplastischen Polymers (Polymere), wobei das Di- oder Polyisocyanat vorzugsweise ausgewählt ist aus der Gruppe bestehend aus Diphenylmethan-4,4'-diisocyanat (MDI), Toluol-2,4-diisocyanat (TDI), Hexamethylen-1,6-diisocyanat (HDI), Polymethylenpolyphenylisocyanat (PMPPI) und Mischungen davon.

11. Reaktive thermoplastische Zusammensetzung, die zur Bildung eines reaktiven Systems brauchbar ist, das ausgewählt ist aus der Gruppe bestehend aus Phasen verträglichmachenden Systemen, Systemen zum Schlichten von Fasern in Verbundwerkstoffen und Systemen zum Dispergieren von Füllmitteln in thermoplastischen Phasen, wobei die Zusammensetzung eine kontinuierliche Phase, die auf mindestens einem thermoplastischen Polymer basiert und in der eine diskontinuierliche Phase dispergiert ist, die überwiegend oder ausschließlich aus mindestens einem chemischen reaktiven Verstärkungsmittel besteht, das mit dem mindestens einen thermoplastischen Polymer unmischbar sein kann und ausgewählt ist aus der Gruppe bestehend aus Epoxyharzen, Polyorganosiloxanen mit (einer) funktionellen SiH-Gruppe(n), Di- oder Polyisocyanaten und Mischungen davon, wobei die Zusammensetzung **dadurch gekennzeichnet ist, dass** sie frei von jeglichem Verträglichmacher zwischen den Phasen ist und das Produkt einer *In-situ-Pfropf-*, -Verzweigungs- und/oder -Vernetzungsreaktion durch reaktives Vermischen dieser Phasen bei einer Scherrate von mehr als 10³ s⁻¹ des mindestens einen Verstärkungsmittels an die Kette des mindestens einen thermoplastischen Polymers so umfasst, dass letztere(s) durch diese Reaktion eine gepfropfte, verzweigte und/oder vernetzte Struktur aufweist (aufweisen), wobei die diskontinuierliche Phase in der kontinuierlichen Phase in Form von Klümpchen mit einem mittels eines Rasterkraftmikroskops gemessenen Zahlenmittel der Größe zwischen 50 nm und 2 µm mit einer maximalen Standardabweichung von 0,5 µm dispergiert ist.

12. Zusammensetzung nach Anspruch 11, **dadurch gekennzeichnet, dass** das mindestens eine Verstärkungsmittel ein Epoxyharz, das vernetzt ist oder nicht, in einer Menge zwischen 0,5 und 60 Gew.-Teilen auf 100 Teile des (der) thermoplastischen Polymers (Polymere) verwendet wird, wobei das Epoxyharz vorzugsweise ausgewählt ist aus der Gruppe bestehend aus Bisphenol-A-Epoxyharzen, Bisphenol-F-Epoxyharzen, Glycolepoxyharzen, bromierten Epoxyharzen, Novolak-Epoxyharzen, Phenol-Epoxyharzen, Epoxyharzen auf Basis von Vinyl und/oder Glycidylether, Monomeren, Oligomeren und Blockpolymeren dieser Harze und Mischungen davon.

13. Zusammensetzung nach Anspruch 12, **dadurch gekennzeichnet, dass** ihr jegliches Vernetzungssystem des Epoxyharzes fehlt, das mit dem mindestens einen thermoplastischen Polymer *in situ* radikalisch wie ein Abbruchmittel reagiert.

14. Zusammensetzung nach Anspruch 12, **dadurch gekennzeichnet, dass** sie ein Vernetzungssystem des Epoxyharzes umfasst, das ausgewählt ist aus der Gruppe bestehend aus Di- oder Polyetheraminen, aminfunktionalisierten Di- oder Polydimethylsiloxanen, aliphatischen und aromatischen Kohlenwasserstoffdi- oder Kohlenwasserstoffpolyaminen, Polyphenylensulfonaminen, Di- oder Polyanhydriden und Di- oder Polycyanamiden.

15. Zusammensetzung nach Anspruch 11, **dadurch gekennzeichnet, dass** das mindestens eine Verstärkungsmittel umfasst:
- ein Polyorganosiloxan mit funktionellen SiH-Gruppen entlang der Kette oder an den Enden der Kette in einer Menge zwischen 0,1 und 40 Gew.-Teilen auf 100 Teile des (der) thermoplastischen Polymers (Polymere) oder
- ein Di- oder Polyisocyanat in einer Menge zwischen 0,5 und 30 Gew.-Teilen auf 100 Teile des (der) thermoplastischen Polymers (Polymere), wobei das Di- oder Polyisocyanat vorzugsweise ausgewählt ist aus der Gruppe bestehend aus Diphenylmethan-4,4'-diisocyanat (MDI), Toluol-2,4-diisocyanat (TDI), Hexamethylen-1,6-diisocyanat (HDI), Polymethylenpolyphenylisocyanat (PMPPI) und Mischungen davon.

16. Zusammensetzung nach einem der Ansprüche 11 bis 15, **dadurch gekennzeichnet, dass**:
- die kontinuierliche Phase auf mindestens einem Polyetherblockamid (PEBA) basiert, wobei die diskontinuierliche Phase auf mindestens einem Epoxyharz und vorzugsweise einem Vernetzungssystem vom Amintyp basiert oder
- die kontinuierliche Phase auf einem thermoplastischen Polyurethan (TPU) basiert, wobei die diskontinuierliche Phase auf mindestens einem Polyorganosiloxan mit (einer) funktionellen SiH-Gruppe(n) oder einem Di- oder Polyisocyanat basiert oder
- die kontinuierliche Phase auf einer Mischung mindestens eines Polyetherblockamids (PEBA) mit einem thermoplastischen Polyurethan (TPU) basiert, wobei die diskontinuierliche Phase entweder auf mindestens einem Epoxyharz und vorzugsweise einem Vernetzungssystem vom Amintyp oder einem Di- oder Polyisocyanat basiert, oder sogar dadurch, dass
- die kontinuierliche Phase auf einem Polyamid basiert, wobei die diskontinuierliche Phase auf mindestens einem Epoxyharz und vorzugsweise einem Amid-Vernetzungssystem mit einem oder ohne ein Mittel mit Amin-, Acrylat- oder Methacrylatblöcken basiert.

## Claims

1. Method for preparing a reactive thermoplastic composition devoid of any compatibilizing between the phases comprising a continuous phase which is made of at least one thermoplastic polymer and wherein a discontinuous phase is dispersed mostly or exclusively comprised of at least one reactive reinforcement chemical agent that can be immiscible with said at least one thermoplastic polymer and chosen from the group comprising epoxy resins, polyorganosiloxanes with SiH functional groups, di- or poly-isocyanates and mixtures thereof, this method being **characterised in that** it comprises *in situ* grafting, branching and/or crosslinking, by a reactive mixture of these phases with a shear rate greater than 10³ s⁻¹, of said at least one reinforcement agent on the chain of said at least one thermoplastic polymer, so that said discontinuous phase is dispersed in said continuous phase in the form of nodules having a number-average size, measured with an atomic force microscope, between 50µm and 2µm with a maximum standard deviation of 0.5µm.

2. Method according to claim 1, **characterised in that** this reactive mixing is carried out in a non-inert atmosphere and at a temperature greater than at least 30°C at the melting point of said thermoplastic polymer or of that of said thermoplastic polymers which is the highest.

3. Method according to claim 1 or 2, **characterised in that** during this reactive mixing no compatibilizing agent is used between said phases.

4. Method according to claim 1 or 2, **characterised in that** during this reactive mixing, at least one compatibilizing agent is used between these phases which is chosen from the group comprising statistic monomers, oligomers and polymers or with blocks having at least one acrylate, methacrylate or amine functional group and grafted polyolefins, preferably grafted by a maleic anhydride, and **in that** this compatibilizing agent is a grafted polyolefin in particular in the case where said at least one thermoplastic polymer is polyolefinic.

5. Method according to one of the preceding claims, **characterised in that** this reactive mixing is carried out in a twin-screw extruder more preferably co-rotating, in at least one pass and with a residence time of said phases between 1 min. and 2 min, and **in that** said at least one reinforcement agent is introduced into the extruder by means of a pump for example a peristaltic pump, following the introduction of said at least one thermoplastic polymer.

6. Method according to one of claims 1 to 4, **characterised in that** this reactive mixing is carried out in an internal mixer, by introducing therein simultaneously or not said at least one thermoplastic polymer and said at least one reinforcement agent.

7. Method according to one of the preceding claims, **characterised in that** an epoxy resin crosslinked or not is used for said at least one reinforcement agent according to a quantity between 0.5 and 60 parts by weight for 100 parts of thermoplastic polymer(s), with this epoxy resin being preferably chosen from the group comprising bisphenol A epoxy resins, bisphenol F epoxy resins, glycol epoxy resins, brominated epoxy resins, novolak epoxy resins , phenolic epoxy resins, vinyl and/or glycidyl-ether epoxy resins, monomers, oligomers and polymers with blocks of these resins and mixtures thereof.

8. Method according to claim 7, **characterised in that** no crosslinking system of said epoxy resin is used, which radically reacts *in situ* with said at least one thermoplastic polymer in the manner of a terminating agent.

9. Method according to claim 7, **characterised in that** a crosslinking system of said epoxy resin is used which is chosen from the group comprising di- or polyetheramines, functionalised amine di- or polydimethylsiloxanes, aliphatic and aromatic hydrocarbon di- or polyamines, amine sulfone polyphenylene, di- or polyanhydrides and di- or polycyanamides.

10. Method according to one of claims 1 to 6, **characterised in that** for said at least one reinforcement agent is used:
- a polyorganosiloxanes with SiH functional groups along the chain or at the ends of the chain, according to a quantity between 0.1 and 40 parts by weight for 100 parts of thermoplastic polymer(s), or
- a di- or poly-isocyanate according to a quantity between 0.5 and 30 parts by weight for 100 parts of thermoplastic polymer(s), with this di- or polyisocyanate being preferably chosen from the group comprising diphenylmethane-4,4'-diisocyanate (MDI), toluene-2,4-diisocyanate (TDI), hexamethylene-1,6-diisocyanate (HDI), polymethylene polyphenyl isocyanate (PMPPI) and mixtures thereof.

11. Reactive thermoplastic composition, that can be used to form a reactive system chosen from the group comprising compatibilizing systems between phases, systems for sizing fibres in composites and systems for dispersing loads in thermoplastic phases, with the composition comprising a continuous phase which is made of at least one thermoplastic polymer and wherein a discontinuous phase is dispersed mostly or exclusively comprised of at least one reactive reinforcement chemical agent that can be immiscible with said at least one thermoplastic polymer and chosen from the group comprising epoxy resins, polyorganosiloxanes with SiH functional group(s), di- or poly-isocyanates and mixtures thereof, with this composition being **characterised in that** it is devoid of any compatibilizing agent between said phases and comprises the product of an *in situ* reaction of grafting, branching and/or crosslinking, by a reactive mixture of these phases under a shear rate greater than 10³ s⁻¹, of said at least one reinforcement agent on the chain of said at least one thermoplastic polymer, in such a way that the latter have by this reaction a grafted, branched and/or crosslinked structure, said discontinuous phase being dispersed in said continuous phase in the form of nodules of a number-average size, measured with an atomic force microscope, between 5 µm and 2µm with a maximum standard deviation of 0.5µm.

12. Composition according to claim 11, **characterised in that** said at least one reinforcement agent comprises an epoxy resin crosslinked or not according to a quantity between 0.5 and 60 parts by weight for 100 parts of thermoplastic polymer(s), with this epoxy resin being preferably chosen from the group comprising bisphenol A epoxy resins, bisphenol F epoxy resins, glycol epoxy resins, brominated epoxy resins, novolak epoxy resins, phenolic epoxy resins, vinyl and/or glycidyl-ether epoxy resins, monomers, oligomers and polymers with blocks of these resins and mixtures thereof.

13. Composition according to claim 12, **characterised in that** it is devoid of any crosslinking system of said epoxy resin, which radically reacts *in situ* with said at least one thermoplastic polymer in the manner of a terminating agent.

14. Composition according to claim 12, **characterised in that** it comprises a crosslinking system of said epoxy resin which is chosen from the group comprising di- or polyetheramines, functionalised amine di- or polydimethylsiloxanes, aliphatic and aromatic hydrocarbon di- or polyamines, amine sulfone polyphenylene, di- or polyanhydrides and di- or polycyanamides.

15. Composition according to claim 11, **characterised in that** said at least one reinforcement agent comprises:
- a polyorganosiloxanes with SiH functional groups along the chain or at the ends of the chain, according to a quantity between 0.1 and 40 parts by weight for 100 parts of thermoplastic polymer(s), or
- a di- or poly-isocyanate according to a quantity between 0.5 and 30 parts by weight for 100 parts of thermoplastic polymer(s), with this di- or polyisocyanate being preferably chosen from the group comprising diphenylmethane-4,4'-diisocyanate (MDI), toluene-2,4-diisocyanate (TDI), hexamethylene-1,6-diisocyanate (HDI), polymethylene polyphenyl isocyanate (PMPPI) and mixtures thereof.

16. Composition according to one of claims 11 to 15, **characterised in that**:
- said continuous phase has a base of at least one polyether block amide (PEBA), said discontinuous phase having a base of at least one epoxy resin and more preferably of a crosslinking system of the amine type, or
- said continuous phase has a base of a thermoplastic polyurethane (TPU), said discontinuous phase having a base of at least one polyorganosiloxane with SiH functional group(s) or of a di- or polylsocyanate, or
- said continuous phase has a base of a mixture of at least one polyether block amide (PEBA) and of a thermoplastic polyurethane (TPU), said discontinuous phase having a base either of at least one epoxy resin and more preferably of a crosslinking system of the amine type, or of a di- or polyisocyanate, or further **in that**
- said continuous phase has a base of a polyamide, said discontinuous phase having a base of at least one epoxy resin and more preferably of a crosslinking amide system with or without agent with amine, acrylate or methacrylate blocks.
